# EUROPÄISCHE PATENTANMELDUNG

(11) **EP 4 782 365 A1**
(43) Veröffentlichungstag der Anmeldung: **29.07.2026**
(21) Anmeldenummer: 26168697.6
(22) Anmeldetag: 28.06.2023
(51) Int. Cl.: B65G 1/00, B65G 1/137, B65G 43/00, G06F 11/07

(54) **VERBESSERTE UMSCHALTUNG VON EINEM ENERGIESPARMODUS IN EINEN NORMALBETRIEBSMODUS IN EINEM KOMMISSIONIERSYSTEM**

(30) Priorität: 30.06.2022 AT 504782022
(62) Teilanmeldung aus: 23745045.7
(71) Anmelder: TGW Logistics GmbH, 4614 Marchtrenk (AT)
(72) Erfinder: BAUMAN, Alexander Franz, 4714 Meggenhofen (AT); PICHELSBERGER, Thomas Bernhard, 4283 Bad Zell (AT); TRINKL, Arnold Franz, 4632 Pichl bei Wels (AT)
(74) Vertreter: Burger, Hannes Alfred

(57) **Zusammenfassung**

Es wird ein Kommissioniersystem (1) mit einem Warenlager (3a, 3b), einer Kommissionierstation (14), einer Fördertechnik (8a..8e, 10, 12a..12c) zum Transportieren von Waren (9a..9h, 11), einem Antriebssystem (M) für die Fördertechnik (8a..8e, 10, 12a..12c), einem Steuersystem (22) für die Fördertechnik (8a..8e, 10, 12a..12c) angegeben, wobei das Kommissioniersystem (1) aus einem Normalbetriebsmodus in einen Energiesparmodus und umgekehrt schaltbar ist. Im Energiesparmodus wird zumindest eine Versorgungsspannung (Uv) für zumindest einen Teil des Kommissioniersystems (1) bewusst abgeschaltet. Das Steuersystem (22) ist weiter dazu eingerichtet, beim Umschalten vom Energiesparmodus in den Normalbetriebsmodus Fehlermeldungen, die auf einen bewusst herbeigeführten Ausfall der Versorgungsspannung (Uv) zurückzuführen sind, zu maskieren, zu unterdrücken oder automatisch zu quittieren und/oder Fehlerdiagnosefunktionen oder Fehlerbehebungsfunktionen die auf einen solchen bewusst herbeigeführten Ausfall der Versorgungsspannung (Uv) zurückzuführen sind, zu unterdrücken oder automatisch zu quittieren. Des Weitern wird ein Verfahren zum Betrieb eines solchen Kommissioniersystems (1) angegeben.

## Beschreibung

Die Erfindung betrifft ein Kommissioniersystem und ein Verfahren zum Umschalten von einem Energiesparmodus in einen Normalbetriebsmodus in einem Kommissioniersystem gemäß dem Oberbegriff der Ansprüche 1 und 10.

Im Stand der Technik existieren zwar Vorschläge für einen Energiesparmodus in einem Kommissioniersystem, die Komplexität beim Hochlauf-Vorgang führt aber dazu, dass der Energiesparmodus vom Bedienpersonal für das Kommissioniersystem wenig oder gar nicht genutzt wird. Wenn überhaupt wird der Energiesparmodus wegen des aufwändigen Hochlauf-Vorgangs nur für vergleichsweise lange Betriebspausen eingesetzt. Die Zielsetzung des Energiesparmodus wird daher nicht oder nur unzureichend erreicht.

Die JP 5 879941 B2 offenbart ein Kommissioniersystem und ein Verfahren zum Umschalten von einem Energiesparmodus in einen Normalbetriebsmodus in einem Kommissioniersystem gemäß dem Oberbegriff der Ansprüche 1 und 10.

Das Kommissioniersystem gemäß der JP 5 879941 B2 umfasst ein Warenlager, eine Kommissionierstation, eine Fördertechnik zum Transportieren von Waren zwischen dem Warenlager und der Kommissionierstation, ein Antriebssystem für die Fördertechnik, ein Steuersystem für die Fördertechnik und ein Energieversorgungssystem, welches dazu eingerichtet ist, das Antriebssystem und das Steuersystem mit Energie zu versorgen, und ein elektronisches Energiesparmodul, mit welchem das Kommissioniersystem aus einem Normalbetriebsmodus in einen Energiesparmodus und aus dem Energiesparmodus in den Normalbetriebsmodus schaltbar ist. Gemäß dem Verfahren kann das Kommissioniersystem von einem Energiesparmodus in einen Normalbetriebsmodus umgeschaltet werden, wobei im Energiesparmodus zumindest ein Teil des Energieversorgungssystems abgeschaltet ist.

Eine Aufgabe der Erfindung ist es daher, ein verbessertes Kommissioniersystem und ein verbessertes Verfahren zum Umschalten von einem Energiesparmodus in einen Normalbetriebsmodus anzugeben. Insbesondere sollen die oben angegebenen Nachteile überwunden und die Verwendbarkeit eines Energiesparmodus in einem Kommissioniersystem verbessert werden. Die Aufgabe der Erfindung wird durch ein Kommissioniersystem gemäß Anspruch 1 gelöst, bei dem das Steuersystem, insbesondere umfassend das Energiesparmodul, eingerichtet ist,
a) Fehlermeldungen beim Umschalten vom Energiesparmodus in den Normalbetriebsmodus zu maskieren, zu unterdrücken oder automatisch zu quittieren, wenn diese auf einen bewusst herbeigeführten Ausfall der Versorgungsspannung (Uv) zurückzuführen sind, und/oder
b) Fehlerdiagnosefunktionen oder Fehlerbehebungsfunktionen beim Umschalten vom Energiesparmodus in den Normalbetriebsmodus zu unterdrücken oder automatisch zu quittieren, wenn diese auf einen bewusst herbeigeführten Ausfall der Versorgungsspannung (Uv) zurückzuführen sind.

Vorteilhafterweise kann ein Fehlermeldungs-Quittierelement beim Umschalten vom Energiesparmodus in den Normalbetriebsmodus bereitgestellt werden, mittels welchem mehrere Fehlermeldungen gleichzeitig quittierbar sind.

Weiterhin wird die Aufgabe der Erfindung durch ein Verfahren zum Umschalten des Kommissioniersystems von einem Energiesparmodus in einen Normalbetriebsmodus mit einem elektronischen Steuersystem, insbesondere umfassend das Energiesparmodul, gelöst, bei dem
a) Fehlermeldungen beim Umschalten vom Energiesparmodus in den Normalbetriebsmodus vom Steuersystem, insbesondere umfassend das Energiesparmodul maskiert, unterdrückt oder automatisch quittiert werden, sofern diese auf einen bewusst herbeigeführten Ausfall der Versorgungsspannung (Uv) zurückzuführen sind, und/oder
b) Fehlerdiagnosefunktionen oder Fehlerbehebungsfunktionen beim Umschalten vom Energiesparmodus in den Normalbetriebsmodus vom Steuersystem, insbesondere umfassend das Energiesparmodul, unterdrückt oder automatisch quittiert werden, sofern diese auf einen bewusst herbeigeführten Ausfall der Versorgungsspannung (Uv) zurückzuführen sind, und/oder
c) ein Fehlermeldungs-Quittierelement beim Umschalten vom Energiesparmodus in den Normalbetriebsmodus vom Steuersystem, insbesondere umfassend das Energiesparmodul, bereitgestellt wird, mittels welchem mehrere Fehlermeldungen gleichzeitig quittierbar sind.

Die vorgeschlagenen Maßnahmen bewirken, dass das Kommissioniersystem leicht vom Energiesparmodus in den Normalbetriebsmodus übergeführt werden kann, ohne dass dazu aufwändige Hochlauf-Prozeduren durchlaufen werden müssen und ohne dass dazu umfangreiche Eingriffe seitens des Bedienpersonals für das Kommissioniersystem nötig wären. Insbesondere wird ein automatisches Hochfahren des Kommissioniersystems bei einem Umschalten vom Energiesparmodus in den Normalbetriebsmodus ermöglicht. Daher kann das Kommissioniersystem auch für relativ kurze Zeitspannen in einen Energiesparmodus versetzt werden, ohne dass dies große Störungen im Kommissionierablauf nach sich ziehen würde. Insgesamt tragen die vorgeschlagenen Maßnahmen daher dazu bei, dass der Energieverbrauch in einem Kommissioniersystem gegenüber dem Stand der Technik reduziert werden kann. Darüber hinaus braucht eine Software zum Betrieb eines Kommissioniersystems durch die vorgeschlagenen Maßnahmen nicht oder nur geringfügig verändert werden. Dadurch kann die komfortable Umschaltung vom Energiesparmodus in den Normalbetriebsmodus auch mit geringem Aufwand implementiert werden, auch in bestehende Kommissioniersysteme.

Das Steuersystem, insbesondere umfassend das Energiesparmodul, kann Software und/oder Hardware umfassen und insbesondere als Leitrechner oder Teil eines Leitrechners mit integrierten Schaltelementen zum Schalten des Energieversorgungssystems oder Schaltelementen, die über Steuerleitungen mit dem Leitrechner verbunden sind, ausgebildet sein. Die Schaltelemente zum Schalten des Energieversorgungssystems können insbesondere als Relais oder Schütze ausgebildet sein. Über entsprechende Schaltbefehle vom Leitrechner können die Schaltelemente ein- oder ausgeschaltet werden. In ähnlicher Weise kann das Fehlermeldungs-Quittierelement durch ein physisches Schaltelement gebildet sein, also zum Beispiel durch einen mechanischen Schalter oder Taster.

Vorzugsweise umfasst das Steuersystem, insbesondere umfassend das Energiesparmodul, ein Softwaremodul, mittels welchem das Kommissioniersystem in den Energiesparmodus schaltbar ist. Besonders bevorzugt umfasst das Softwaremodul eine grafische Benutzeroberfläche, welche eine Schaltfläche aufweist, wobei das Kommissioniersystem durch ein Betätigen der Schaltfläche in den Energiesparmodus schaltbar ist. Die Schaltfläche kann hierbei derart ausgebildet sein, dass diese durch Anklicken, durch Ziehen der Schaltfläche entlang eines vordefinierten (angezeigten) Pfades, oder dergleichen betätigt wird. In gleicher Weise kann das Fehlermeldungs-Quittierelement durch eine weitere solche Schaltfläche gebildet sein.

Die Fördertechnik kann eine Einlager- und/oder Auslagerfördertechnik (z. B. Regalbediengeräte oder Shuttles), stationäre Fördertechnik und/oder mobile Fördertechnik umfassen.

Über das Steuersystem, insbesondere umfassend das elektronische Energiesparmodul, wird insbesondere elektrische Energie vom Kommissioniersystem oder Teilen davon weggeschaltet; das Steuersystem, insbesondere umfassend das elektronische Energiesparmodul, bezieht sich aber auch auf die Einsparung von anderen Energieformen. Beispielsweise kann das Steuersystem, insbesondere umfassend das Energiesparmodul, auch pneumatische Energie vom Kommissioniersystem oder Teilen davon wegschalten.

Eine "Fehlermeldung" zeigt einen Fehler im Kommissioniersystem an. Insbesondere kann eine Fehlermeldung aktiv von jener Einheit erzeugt werden, in welcher der Fehler auftritt. Beispielsweise kann eine Fehlermeldung den Ausfall einer Antriebskomponente anzeigen und auch von dieser erzeugt werden.

Eine "Fehlerdiagnosefunktion" ist insbesondere eine Funktion, die in Software und/oder Hardware realisiert ist und für die Diagnose eines eventuellen Fehlers im Kommissioniersystem ausgeführt werden kann. Eine Fehlerdiagnosefunktion dient also insbesondere dem Erheben von Fehlern, die nicht aktiv erzeugt werden. Beispielsweise kann auf diese Weise die ordnungsgemäße Funktion oder eben der Ausfall einer Antriebskomponente geprüft werden.

Eine "Fehlerbehebungsfunktion" ist insbesondere eine Funktion, die in Software und/oder Hardware realisiert ist und für Behebung eines Fehlers im Kommissioniersystem ausgeführt werden kann. Beispielsweise kann die Software einer Antriebskomponente von einer Fehlerbehebungsfunktion neu gestartet werden, um einen vorliegenden Fehler nach Möglichkeit zu beheben.

"Maskieren" einer Fehlermeldung bedeutet insbesondere, dass die Fehlermeldung zwar erzeugt, dem Bedienpersonal des Kommissioniersystems aber nicht angezeigt wird.

"Unterdrücken" einer Fehlermeldung bedeutet insbesondere, dass die Fehlermeldung nicht erzeugt wird. Analog bedeutet "Unterdrücken" einer Fehlerdiagnosefunktion oder Fehlerbehebungsfunktion, dass diese nicht ausgeführt wird.

"Automatisches Quittieren" einer Fehlermeldung bedeutet insbesondere, dass die Fehlermeldung zwar erzeugt und unter Umständen auch angezeigt, jedoch ohne Intervention des Bedienpersonals des Kommissioniersystems automatisch bestätigt wird. Analog bedeutet "Automatisches Quittieren einer Fehlerdiagnosefunktion oder Fehlerbehebungsfunktion insbesondere, dass diese zwar ausgeführt, jedoch ohne Intervention des Bedienpersonals des Kommissioniersystems automatisch bestätigt wird.

Das "gleichzeitige Quittieren" mehrerer Fehlermeldungen mit Hilfe des Fehlermeldungs-Quittierelements stellt eine automatisierte Möglichkeit zur Bestätigung von Fehlermeldungen dar. Zwar erfordert diese Variante die Intervention des Bedienpersonals des Kommissioniersystems, jedoch ist die Bestätigung der Fehlermeldungen für das Bedienpersonal einfach, da mit nur einer Betätigung des Fehlermeldungs-Quittierelements mehrere Fehlermeldungen auf einmal bestätigt werden können. Der Begriff "gleichzeitig" bezieht sich dabei auf den Vorgang der Betätigung des Fehlermeldungs-Quittierelements. Die einzelnen Fehlermeldungen als solche können dadurch gleichzeitig quittiert werden, aber auch eine zeitliche Abfolge von Quittierungen einzelner Fehlermeldungen ist denkbar. Dies ist insbesondere dann sinnvoll, wenn Fehlermeldungen voneinander abhängen und nur in einer bestimmten Reihenfolge quittiert oder bestätigt werden können. Das heißt, die Quittierung der Fehlermeldungen an sich kann sich auch über einen bestimmten Zeitraum erstrecken. In diesem Sinn kann der Begriff "gleichzeitig" im gegebenen Zusammenhang synonymisch mit "auf einmal" oder "durch eine einzige Betätigung des Fehlermeldungs-Quittierelements" verstanden werden.

Die vorgestellten Ausführungsvarianten können alleine verwendet werden oder in beliebiger Kombination. So ist zum Beispiel denkbar, dass entweder nur die Variante a), nur die Variante b) oder nur die Variante c) verwendet wird. Auch die wahlweise Nutzung einer von mehreren grundsätzlich verfügbaren Varianten wäre möglich. Denkbar ist aber auch, dass für einen Teil der Fehlermeldungen die Variante a), für einen anderen Teil die Variante c) angewandt wird.

Ähnliche Erwägungen können auf der Ebene der Begriffe "Maskieren", "Unterdrücken", "automatisches Quittieren" und "gleichzeitiges Quittieren" (respektive "automatisiertes Quittieren") getroffen werden. So ist zum Beispiel wiederum denkbar, dass grundsätzlich nur eine der angeführten Varianten angewandt wird oder eine von mehreren grundsätzlich verfügbaren Varianten ausgewählt werden kann. Denkbar ist aber auch, dass für einen Teil der Fehlermeldungen die eine Variante, für einen anderen Teil eine andere Variante angewandt wird.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es,
wenn das Steuersystem ein Submodul mit einer Spannungsüberwachungseinrichtung umfasst, welche einen Ausfall einer Versorgungsspannung für das Submodul detektiert und auch nach einem Wiedereinschalten der Versorgungsspannung mittels einer Fehlermeldung anzeigt, und
wenn das Steuersystem
a) Fehlermeldungen betreffend den genannten Ausfall der Versorgungsspannung beim Umschalten vom Energiesparmodus in den Normalbetriebsmodus maskiert, unterdrückt und/oder automatisch quittiert, und/oder
b) Fehlerdiagnosefunktionen betreffend den genannten Ausfall der Versorgungsspannung beim Umschalten vom Energiesparmodus in den Normalbetriebsmodus unterdrückt oder diese automatisch quittiert, und/oder
c) ein Fehlermeldungs-Quittierelement beim Umschalten vom Energiesparmodus in den Normalbetriebsmodus bereitstellt, mittels welchem mehrere Fehlermeldungen betreffend den genannten Ausfall der Versorgungsspannung gleichzeitig quittierbar sind.

Gleichermaßen ist es vorteilhaft, wenn das Steuersystem dazu ausgebildet ist, die Schritte a) und/oder b) und/oder c) auszuführen.

Submodule des Steuersystems können eine Spannungsüberwachungseinrichtung aufweisen, welche einen Ausfall einer Versorgungsspannung für das Submodul detektiert und diesen Ausfall nach einem Wiedereinschalten der Versorgungsspannung mittels einer Fehlermeldung anzeigt. Auf diese Weise soll verhindert werden, dass es durch kurzfristigen Wegfall der Versorgungsspannung zu unerklärlichen Fehlern im betreffenden Teil des Steuersystems kommt. Stattdessen ist ein Ausfall einer Versorgungsspannung jederzeit nachvollziehbar, auch wenn er nur kurzfristig ist. Fehler, welche auf einen solchen Ausfall einer Versorgungsspannung zurückzuführen sind, können daher entsprechend zugeordnet werden. In einem Energiesparmodus führen solche an sich zweckmäßigen Spannungsüberwachungseinrichtungen ohne weitere Maßnahmen aber dazu, dass beim Umschalten vom Energiesparmodus in den Normalbetriebsmodus in einem Kommissioniersystem eine Fülle von Fehlermeldungen auftreten und/oder eine Fülle von Fehlerdiagnosefunktionen ausgeführt werden. Diese müssen quittiert werden, um einen ordnungsgemäßen Betrieb des Kommissioniersystems nach dem Umschalten vom Energiesparmodus in den Normalbetriebsmodus zu gewährleisten. Dies ist für das Bedienpersonal für das Kommissioniersystem jedoch sehr zeitaufwändig, sodass der Energiesparmodus im Stand der Technik wie erwähnt wenig oder gar nicht genutzt wird. Die vorgeschlagenen Maßnahmen bewirken dagegen eine wesentliche Erleichterung, da Fehlermeldungen, welche auf einen durch das Umschalten in den Energiesparmodus bewusst herbeigeführten Ausfall der Versorgungsspannung zurückzuführen sind, beim Umschalten vom Energiesparmodus in den Normalbetriebsmodus maskiert, unterdrückt und/oder automatisch quittiert werden und/oder durch das Fehlermeldungs-Quittierelement auf einfache Weise manuell quittiert werden können. Gleichermaßen werden Fehlerdiagnosefunktionen, welche auf einen durch das Umschalten in den Energiesparmodus bewusst herbeigeführten Ausfall der Versorgungsspannung zurückzuführen sind, beim Umschalten vom Energiesparmodus in den Normalbetriebsmodus unterdrückt oder automatisch quittiert. Das genannte Submodul des Steuersystems kann z.B. ein Steuermodul oder ein Messmodul sein.

Grundsätzlich ist das Vorsehen einer Spannungsüberwachungseinrichtung für die Detektion eines Ausfalls einer Versorgungsspannung für ein Submodul keine Grundvoraussetzung. Denkbar ist beispielsweise auch, dass ein Spannungsausfall für ein Submodul (indirekt) dadurch detektiert wird, dass es über einen Kommunikationskanal nicht mehr erreichbar ist. Im Steuersystem kann dann eine entsprechende Fehlermeldung generiert werden. Denkbar ist auch, dass bei einem Abfall der Versorgungsspannung vom Submodul noch eine entsprechende Fehlermeldung abgesetzt wird, bevor dieses ausfällt.

Vorteilhaft ist es,
wenn das Kommissioniersystem in räumlich begrenzte Zonen eingeteilt ist, welche im Normalbetriebsmodus jeweils durch das Energieversorgungssystem mit Energie versorgt sind, und
wenn das Steuersystem dazu ausgebildet ist, eine, mehrere oder alle Zonen der Zonen bedarfsweise aus dem Normalbetriebsmodus in den Energiesparmodus und aus dem Energiesparmodus in den Normalbetriebsmodus zu schalten, wobei im Energiesparmodus zumindest jener Teil des Energieversorgungssystems abgeschaltet ist, welcher die jeweilige Zone oder jeweiligen Zonen mit Energie versorgt, und
wenn das Steuersystem dazu ausgebildet ist,
   a) der Zone zugeordnete Fehlermeldungen beim Umschalten der Zone vom Energiesparmodus in den Normalbetriebsmodus zu maskieren, zu unterdrücken oder automatisch zu quittieren, und/oder
   b) der Zone zugeordnete Fehlerdiagnosefunktionen oder Fehlerbehebungsfunktionen beim Umschalten der Zone vom Energiesparmodus in den Normalbetriebsmodus zu unterdrücken oder automatisch zu quittieren, und/oder
   c) ein Fehlermeldungs-Quittierelement beim Umschalten vom Energiesparmodus in den

Normalbetriebsmodus bereitzustellen, mittels welchem mehrere der Zone zugeordnete Fehlermeldungen gleichzeitig quittierbar sind.

Gleichermaßen ist es vorteilhaft, wenn das Steuersystem, insbesondere umfassend das Energiesparmodul, dazu ausgebildet ist, die obigen Schritte auszuführen.

Beispielsweise können die Zonen durch Funktionsgruppen des Kommissioniersystems gebildet sein oder diese umfassen, etwa eine Kommissionierzone, eine Lagerzone, eine Transportzone, eine Sortierzone und dergleichen. Eine Zone kann eine virtuelle Begrenzung aufweisen und/oder ganz oder teilweise durch bauliche Maßnahmen begrenzt sein, wobei ein Zutritt zu der Zone durch eine Person nur an einem Durchgang ermöglicht ist. Solche baulichen Maßnahmen sind insbesondere Wände, jedoch auch andere Einrichtungen im Kommissioniersystem, die von Personen nicht passiert werden können oder zumindest nicht für ein Passieren einer Person vorgesehen sind. So sind zum Beispiel Gerüste, Gitter, Zäune und ähnliches, die zwar prinzipiell durch- oder überklettert werden können, jedoch nicht dafür vorgesehen sind, bauliche Maßnahmen, die nicht für ein Passieren einer Person vorgesehen sind. Ein Zutritt einer Person zu einer Zone, die durch bauliche Maßnahmen begrenzt ist, kann an einem Durchgang oder nur an einem Durchgang ermöglicht sein. Solche Durchgänge sind zum Beispiel entsprechende Wandausschnitte, Türe, Tore, und dergleichen.

Günstig ist es, wenn das Steuersystem, insbesondere umfassend das Energiesparmodul, mehrere Energie-Schaltmodule umfasst, welche jeweils einer Zone der Zonen zugeordnet sind, wobei eine oder mehrere Zonen bedarfsweise durch das jeweils zugeordnete Energie-Schaltmodul aus dem Normalbetriebsmodus in den Energiesparmodus und aus dem Energiesparmodus in den Normalbetriebsmodus geschaltet werden. Gleichermaßen ist es günstig, wenn das Steuersystem, insbesondere umfassend das Energiesparmodul, mehrere Energie-Schaltmodule umfasst, welche jeweils einer Zone der Zonen zugeordnet sind und dazu ausgebildet sind, die jeweilige Zone bedarfsweise aus dem Normalbetriebsmodus in den Energiesparmodus und aus dem Energiesparmodus in den Normalbetriebsmodus zu schalten. Bei dieser Ausführungsvariante ist das Energiesparmodul hierarchisch aufgebaut. Der Aufbau, der Betrieb und die Wartung des Energiesparmoduls kann dadurch erleichtert werden. Wenn das Energiesparmodul ein Softwaremodul umfasst, können die Energie-Schaltmodule beispielsweise als Softwaresubmodule ausgebildet sein. Ebenso ist es denkbar, dass die Energie-Schaltmodule jeweils als zuvor beschriebene Schaltfläche implementiert sind, sodass jeweils eine Schaltfläche jeweils einer Zone der Zonen zugeordnet ist.

Besonders vorteilhaft ist es,
wenn das Kommissioniersystem eine Integritäts-Überwachungseinrichtung umfasst, die eine Integrität der Zone im Energiesparmodus überwacht, wobei die Integrität der Zone zumindest dann verletzt wird, wenn die Integritäts-Überwachungseinrichtung einen Zutritt einer Person zu der Zone detektiert, und
wenn das Steuersystem
   a) der Zone zugeordnete Fehlermeldungen beim Umschalten der Zone vom Energiesparmodus in den Normalbetriebsmodus an einer Ausgabevorrichtung anzeigt, wenn die Integrität der Zone beim genannten Umschalten verletzt ist, und maskiert, unterdrückt und/oder automatisch quittiert, wenn die Integrität der Zone beim genannten Umschalten unversehrt ist, und/oder
   b) der Zone zugeordnete Fehlerdiagnosefunktionen oder Fehlerbehebungsfunktionen beim Umschalten der Zone vom Energiesparmodus in den Normalbetriebsmodus ausführt, wenn die Integrität der Zone beim genannten Umschalten verletzt ist, und deren Ausführung unterdrückt oder diese automatisch quittiert, wenn die Integrität der Zone beim genannten Umschalten unversehrt ist, und/oder
   c) der Zone zugeordnete Fehlermeldungen beim Umschalten der Zone vom Energiesparmodus in den Normalbetriebsmodus an einer Ausgabevorrichtung anzeigt, wenn die Integrität der Zone beim genannten Umschalten verletzt ist, und ein Fehlermeldungs-Quittierelement beim Umschalten vom Energiesparmodus in den Normalbetriebsmodus bereitstellt, mittels welchem mehrere der Zone zugeordnete Fehlermeldungen gleichzeitig quittierbar sind, wenn die Integrität der Zone beim genannten Umschalten unversehrt ist.

Gleichermaßen ist es vorteilhaft, wenn das Steuersystem, insbesondere umfassend das Energiesparmodul, dazu ausgebildet ist, die Schritte a) und/oder b) und/oder c) auszuführen.

Bei einer Einteilung in Zonen und deren selektivem Schalten in den Energiesparmodus führen an sich zweckmäßige Fehlermeldungen und Fehlerdiagnosefunktionen oder Fehlerbehebungsfunktionen ohne weitere Maßnahmen dazu, dass beim Umschalten vom Energiesparmodus in den Normalbetriebsmodus in einem Kommissioniersystem eine Fülle von Fehlermeldungen auftreten und/oder eine Fülle von Fehlerdiagnosefunktionen ausgeführt werden. Diese müssen quittiert werden, um einen ordnungsgemäßen Betrieb des Kommissioniersystems nach dem Umschalten vom Energiesparmodus in den Normalbetriebsmodus zu gewährleisten. Dies ist für das Bedienpersonal für das Kommissioniersystem jedoch sehr zeitaufwändig, sodass der Energiesparmodus im Stand der Technik wie erwähnt wenig oder gar nicht genutzt wird. Die vorgeschlagenen Maßnahmen bewirken dagegen eine wesentliche Erleichterung, da davon ausgegangen wird, dass der Zone zugeordnete Fehlermeldungen und/oder der Zone zugeordnete Fehlerdiagnosefunktionen oder Fehlerbehebungsfunktionen bedeutungslos sind, wenn die Integrität der Zone beim genannten Umschalten unversehrt ist, das heißt, wenn die Zone im Energiesparmodus beispielsweise nicht von einer Person betreten wurde. Daher werden Fehlermeldungen, welche im Energiesparmodus auftreten, beim Umschalten vom Energiesparmodus in den Normalbetriebsmodus maskiert, unterdrückt und/oder automatisch quittiert und/oder können durch das Fehlermeldungs-Quittierelement auf einfache Weise manuell quittiert werden, wenn die Integrität der Zone beim genannten Umschalten unversehrt ist. Gleichermaßen werden Fehlerdiagnosefunktionen, welche im Energiesparmodus auftreten, beim Umschalten vom Energiesparmodus in den Normalbetriebsmodus unterdrückt oder automatisch quittiert. wenn die Integrität der Zone beim genannten Umschalten unversehrt ist.

Die Angabe "wenn die Integrität der Zone beim genannten Umschalten verletzt ist" bedeutet insbesondere "wenn die Integritäts-Überwachungseinrichtung beim genannten Umschalten eine Verletzung der Integrität der Zone anzeigt". Beispielsweise kann in der Integritäts-Überwachungseinrichtung ein Flag oder Statusbit gesetzt werden oder ein Schaltelement eingeschaltet werden, wenn die Integrität der Zone verletzt wird. In letzterem Fall kann eine Verletzung der Integrität beispielsweise durch einen bestimmten Spannungspegel oder ein bestimmtes Signal angezeigt werden. Die Integritäts-Überwachungseinrichtung kann sowohl in Software als auch in Hardware ausgebildet sein und demzufolge ein Computer-Programm und/oder eine elektronische Schaltung aufweisen.

Eine Integritäts-Überwachungseinrichtung kann auch dazu ausgebildet sein, ein (automatisches) Umschalten vom Energiesparmodus in den Normalbetriebsmodus auszulösen. Dadurch kann zum Beispiel ein Hochlaufvorgang für die Zone dann gestartet werden, wenn eine mit dem Betrieb der Zone betraute Person die Zone betritt, etwa am nächsten Morgen nach einem nächtlichen Stillstand der Zone. Die Zone kann durch die vorgeschlagenen Maßnahmen besonders schnell und komfortabel wieder in Betrieb genommen werden. Das Auslösen des Umschaltvorgangs kann auch nur für ein bestimmtes Zeitfenster vorgesehen sein, beispielsweise von 7:00 bis 9:00 morgens. Wird eine Verletzung der Integrität vor diesem Zeitfenster (im vorliegenden Beispiel also vor 7:00) festgestellt, dann erfolgt keine automatische Auslösung.

Denkbar ist auch, dass bestimmte Integritäts-Überwachungseinrichtungen der Zone bei Verletzung der Integrität (unmittelbar) ein Anzeigen der in der Zone aufgetretenen Fehlermeldungen (Fälle a) und c)) und/oder eine Ausführung der der Zone zugeordneten Fehlerdiagnosefunktionen oder Fehlerbehebungsfunktionen (Fall b) auslösen. Insbesondere kann ein Anzeigen der Fehlermeldungen und/oder Ausführen der Fehlerdiagnosefunktionen oder Fehlerbehebungsfunktionen ausgelöst werden, welche der Detektion durch die Integritäts-Überwachungseinrichtung zugeordnet sind. Dadurch können Verletzungen der Integrität, die als besonders schwerwiegend eingestuft werden, gesondert behandelt werden. Beispielsweise kann dies der Fall sein, wenn ein Eindringen in eine Zone von außerhalb des Kommissioniersystems festgestellt wird.

Vorteilhaft ist es weiterhin, wenn
das Steuersystem ein Submodul mit einer Spannungsüberwachungseinrichtung umfasst, welches einen Ausfall einer Versorgungsspannung für das Submodul detektiert und auch nach einem Wiedereinschalten der Versorgungsspannung mittels einer Fehlermeldung anzeigt, und
wenn das Steuersystem
   a) der Zone zugeordnete Fehlermeldungen betreffend den genannten Ausfall der Versorgungsspannung beim Umschalten der Zone vom Energiesparmodus in einen Normalbetriebsmodus maskiert, unterdrückt und/oder automatisch quittiert, und/oder
   b) der Zone zugeordnete Fehlerdiagnosefunktionen betreffend den genannten Ausfall der Versorgungsspannung beim Umschalten der Zone vom Energiesparmodus in den Normalbetriebsmodus unterdrückt oder diese automatisch quittiert, und/oder
   c) ein Fehlermeldungs-Quittierelement beim Umschalten vom Energiesparmodus in den Normalbetriebsmodus bereitstellt, mittels welchem mehrere der Zone zugeordnete Fehlermeldungen betreffend den genannten Ausfall der Versorgungsspannung gleichzeitig quittierbar sind.

Gleichermaßen ist es vorteilhaft, wenn das Steuersystem, insbesondere umfassend das Energiesparmodul, dazu ausgebildet ist, die Schritte a) und/oder b) und/oder c) auszuführen.

Bei dieser Ausführungsvariante werden die zu einer Spannungsüberwachungseinrichtung und zu einer Zone vorgeschlagenen Maßnahmen beziehungsweise die daraus resultierenden Vorteile kombiniert.

Besonders vorteilhaft ist es,
wenn das Kommissioniersystem eine Integritäts-Überwachungseinrichtung umfasst, die eine Integrität der Zone im Energiesparmodus überwacht, wobei die Integrität der Zone zumindest dann verletzt wird, wenn die Integritäts-Überwachungseinrichtung einen Zutritt einer Person zu der Zone detektiert, und
wenn das Steuersystem ein Submodul mit einer Spannungsüberwachungseinrichtung umfasst, welche einen Ausfall einer Versorgungsspannung für das Submodul detektiert und auch nach einem Wiedereinschalten der Versorgungsspannung mittels einer Fehlermeldung anzeigt, und
wenn das Steuersystem
   a) der Zone zugeordnete Fehlermeldungen inklusive Fehlermeldungen betreffend den genannten Ausfall der Versorgungsspannung beim Umschalten der Zone vom Energiesparmodus in einen Normalbetriebsmodus anzeigt, wenn die Integrität der Zone beim genannten Umschalten verletzt ist, und maskiert, unterdrückt und/oder automatisch quittiert, wenn die Integrität der Zone beim genannten Umschalten unversehrt ist, und/oder
   b) der Zone zugeordnete Fehlerdiagnosefunktionen oder Fehlerbehebungsfunktionen inklusive Fehlerdiagnosefunktionen betreffend den genannten Ausfall der Versorgungsspannung beim Umschalten der Zone vom Energiesparmodus in den Normalbetriebsmodus ausführt, wenn die Integrität der Zone beim genannten Umschalten verletzt ist, und deren Ausführung unterdrückt oder diese automatisch quittiert, wenn die Integrität der Zone beim genannten Umschalten unversehrt ist, und/oder
   c) der Zone zugeordnete Fehlermeldungen inklusive Fehlermeldungen betreffend den genannten Ausfall der Versorgungsspannung beim Umschalten der Zone vom Energiesparmodus in einen Normalbetriebsmodus anzeigt, wenn die Integrität der Zone beim genannten Umschalten verletzt ist, und ein Fehlermeldungs-Quittierelement beim Umschalten vom Energiesparmodus in den Normalbetriebsmodus bereitstellt, mittels welchem mehrere der Zone zugeordnete Fehlermeldungen inklusive Fehlermeldungen betreffend den genannten Ausfall der

Versorgungsspannung gleichzeitig quittierbar sind, wenn die Integrität der Zone beim genannten Umschalten unversehrt ist.

Gleichermaßen ist es vorteilhaft, wenn das Steuersystem, insbesondere umfassend das Energiesparmodul, dazu ausgebildet ist, die obigen Schritte auszuführen.

Bei dieser Ausführungsvariante werden die zu einer Spannungsüberwachungseinrichtung und zu einer Integritäts-Überwachungseinrichtung vorgeschlagenen Maßnahmen beziehungsweise die daraus resultierenden Vorteile kombiniert, wobei die Fehlermeldungen betreffend den genannten Ausfall der Versorgungsspannung bei dieser Ausführungsvariante gleich behandelt werden wie alle anderen Fehlermeldungen.

Besonders vorteilhaft ist es auch,
wenn das Kommissioniersystem eine Integritäts-Überwachungseinrichtung umfasst, die eine Integrität der Zone im Energiesparmodus überwacht, wobei die Integrität der Zone zumindest dann verletzt wird, wenn die Integritäts-Überwachungseinrichtung einen Zutritt einer Person zu der Zone detektiert, und
wenn das Steuersystem ein Submodul mit einer Spannungsüberwachungseinrichtung umfasst, welche einen Ausfall einer Versorgungsspannung für das Submodul detektiert und auch nach einem Wiedereinschalten der Versorgungsspannung mittels einer Fehlermeldung anzeigt, und
wenn das Steuersystem
   a) der Zone zugeordnete Fehlermeldungen exklusive Fehlermeldungen betreffend den genannten Ausfall der Versorgungsspannung beim Umschalten der Zone vom Energiesparmodus in einen Normalbetriebsmodus anzeigt, wenn die Integrität der Zone beim genannten Umschalten verletzt ist, und maskiert, unterdrückt und/oder automatisch quittiert, wenn die Integrität der Zone beim genannten Umschalten unversehrt ist, und der Zone zugeordnete Fehlermeldungen betreffend den genannten Ausfall der Versorgungsspannung beim Umschalten der Zone vom Energiesparmodus in einen Normalbetriebsmodus unabhängig von der Integrität der Zone beim genannten Umschalten maskiert, unterdrückt und/oder automatisch quittiert, und/oder
   b) der Zone zugeordnete Fehlerdiagnosefunktionen oder Fehlerbehebungsfunktionen exklusive Fehlerdiagnosefunktionen betreffend den genannten Ausfall der Versorgungsspannung beim Umschalten der Zone vom Energiesparmodus in den Normalbetriebsmodus ausführt, wenn die Integrität der Zone beim genannten Umschalten verletzt ist, und deren Ausführung unterdrückt oder diese automatisch quittiert, wenn die Integrität der Zone beim genannten Umschalten unversehrt ist, und der Zone zugeordnete Fehlerdiagnosefunktionen betreffend den genannten Ausfall der Versorgungsspannung beim Umschalten der Zone vom Energiesparmodus in den Normalbetriebsmodus unabhängig von der Integrität der Zone beim genannten Umschalten unterdrückt oder diese automatisch quittiert, und/oder
   c) der Zone zugeordnete Fehlermeldungen exklusive Fehlermeldungen betreffend den genannten Ausfall der Versorgungsspannung beim Umschalten der Zone vom Energiesparmodus in einen Normalbetriebsmodus anzeigt, wenn die Integrität der Zone beim genannten Umschalten verletzt ist, und ein Fehlermeldungs-Quittierelement beim Umschalten vom Energiesparmodus in den Normalbetriebsmodus bereitstellt, mittels welchem mehrere der Zone zugeordnete Fehlermeldungen exklusive Fehlermeldungen betreffend den genannten Ausfall der Versorgungsspannung gleichzeitig quittierbar sind, wenn die Integrität der Zone beim genannten Umschalten unversehrt ist, und mittels welchem mehrere der Zone zugeordnete Fehlermeldungen betreffend den genannten Ausfall der Versorgungsspannung unabhängig von der Integrität der Zone beim genannten Umschalten quittierbar sind.

Gleichermaßen ist es vorteilhaft, wenn das Steuersystem, insbesondere umfassend das Energiesparmodul, dazu ausgebildet ist, die obigen Schritte auszuführen.

Bei dieser Ausführungsvariante werden die zu einer Spannungsüberwachungseinrichtung und zu einer Integritäts-Überwachungseinrichtung vorgeschlagenen Maßnahmen beziehungsweise die daraus resultierenden Vorteile wiederum kombiniert, wobei die Fehlermeldungen betreffend den genannten Ausfall der Versorgungsspannung bei dieser Ausführungsvariante jedoch anders behandelt werden als alle anderen Fehlermeldungen. Insbesondere werden der Zone zugeordnete Fehlermeldungen, welche auf einen durch das Umschalten in den Energiesparmodus bewusst herbeigeführten Ausfall der Versorgungsspannung zurückzuführen sind, beim Umschalten vom Energiesparmodus in den Normalbetriebsmodus immer maskiert, unterdrückt und/oder automatisch quittiert. Gleichermaßen werden Fehlerdiagnosefunktionen, welche auf einen bewusst herbeigeführten Ausfall der Versorgungsspannung zurückzuführen sind, beim Umschalten vom Energiesparmodus in den Normalbetriebsmodus immer unterdrückt oder automatisch quittiert.

Besonders vorteilhaft ist es auch, wenn ein Integritäts-Quittierelement vorgesehen ist, welches eine verletzte Integrität der Zone bei Betätigung rücksetzt, beziehungsweise welches dazu eingerichtet ist, eine verletzte Integrität der Zone bei Betätigung rückzusetzen. Dadurch wird Personen, welche eine Zone in einem Energiesparmodus betreten, jedoch gewährleisten, dass keine Änderungen in der Zone vorgenommen wurden, die Möglichkeit gegeben, eine verletzte Integrität rückzusetzen. Beispielsweise kann eine solche Person ein Nachtportier sein, der in einer Zone Nachsicht hält. Das Integritäts-Quittierelement kann beispielsweise als Quittiertaste oder Quittierfunktion ausgebildet und sowohl in Software als auch in Hardware ausgeführt sein. Das zur Ausgestaltung des Fehlermeldungs-Quittierelements durch ein physisches Schaltelement beziehungsweise das zu den Schaltelementen des Steuersystem, insbesondere umfassend das Energiesparmodul, Gesagte gilt dabei sinngemäß. Ebenso sinngemäß gilt das zur Ausgestaltung des Fehlermeldungs-Quittierelements durch eine Schaltfläche beziehungsweise das zur grafischen Benutzeroberfläche des Steuersystem, insbesondere umfassend das Energiesparmodul, Gesagte.

Günstig ist es, wenn die Integritäts-Überwachungseinrichtung für die Überwachung eines Zutritts einer Person zu der Zone im Energiesparmodus einen Türschalter, eine Lichtschranke, ein Lichtgitter, eine Überwachungskamera und/oder einen Bewegungsmelder umfasst. Dadurch kommen für die Überwachung einer Integrität einer Zone gut erprobte und leicht verfügbare Mittel zum Einsatz.

Besonders vorteilhaft ist es weiterhin, wenn
die Integritäts-Überwachungseinrichtung ein auf die Energieversorgung der Zone wirkendes Not-Halt und/oder Not-Aus-Betätigungselement umfasst, und
die Integrität der Zone verletzt ist und verletzt bleibt, wenn das Not-Halt und/oder Not-Aus-Betätigungselement gedrückt wird, selbst wenn das Not-Halt und/oder Not-Aus-Betätigungselement wieder entriegelt wird.

Die Betätigung eines Not-Halt und/oder Not-Aus-Betätigungselements ist zumeist Folge eines gravierenden Fehlers in den Abläufen in einem Kommissioniersystem. Um weiteren Schaden abzuwenden, können Personen, die einen solchen Fehler wahrnehmen, relevante Teile des Kommissioniersystems außer Betrieb nehmen. Zwar sind Not-Halt und/oder Not-Aus-Betätigungselemente an sich zweckmäßige Einrichtungen, jedoch hat deren Betätigung im Energiesparmodus dann keine Konsequenz, wenn die relevanten Anlagenteile des Kommissioniersystems ohnehin stromlos geschaltet sind. Dennoch kann es sinnvoll sein, ein solches Ereignis nicht zu ignorieren, da ja davon ausgegangen werden kann, dass der Betätigung die Wahrnehmung eines Fehlers vorausgegangen ist. Bei dieser Ausführungsvariante ist daher vorgesehen, dass die Integrität der Zone verletzt ist und verletzt bleibt, selbst wenn das Not-Halt und/oder Not-Aus-Betätigungselement wieder entriegelt wird.

Besonders vorteilhaft ist es alternativ, wenn
die Integritäts-Überwachungseinrichtung ein auf die Energieversorgung der Zone wirkendes Not-Halt und/oder Not-Aus-Betätigungselement umfasst, und
die Integrität der Zone nur so lange verletzt ist, solange das Not-Halt und/oder Not-Aus-Betätigungselement gedrückt oder eingerastet ist.

Diese Ausführungsvariante ist der zuvor genannten Ausführungsvariante sehr ähnlich. Allerdings wird in diesem Fall davon ausgegangen, dass die Betätigung des Not-Halt und/oder Not-Aus-Betätigungselements nur so lange von Bedeutung ist, solange dieses gedrückt oder eingerastet ist. Bei dieser Ausführungsvariante ist daher vorgesehen, dass die Integrität der Zone nur so lange verletzt ist, solange das Not-Halt und/oder Not-Aus-Betätigungselement gedrückt oder eingerastet ist. Wird das Not-Halt und/oder Not-Aus-Betätigungselement losgelassen oder entriegelt, dann wird die Integrität der Zone wieder hergestellt.

Unter "Not-Halt" ist im Rahmen dieser Offenbarung insbesondere das Stoppen von bewegten Einrichtungen zu verstehen, ohne dass die Energiezufuhr zu dieser Einrichtung notwendigerweise (vollständig) unterbrochen wird. Beispielsweise kann ein Antriebsmotor abgeschaltet und gleichzeitig eine elektromagnetische Bremse betätigt werden. Solcherart kann eine Gefährdung, welche von bewegten Teilen ausgeht, abgewendet werden, nicht notwendigerweise jedoch eine Gefährdung, welche durch die Energieversorgung als solcher besteht.

Unter "Not-Aus" ist im Rahmen dieser Offenbarung insbesondere die Unterbrechung einer Energiezufuhr zu verstehen, ohne dass eine Bewegung von bewegten Einrichtungen notwendigerweise aktiv gestoppt wird. Beispielsweise kann ein Antriebsmotor abgeschaltet werden, ohne dass dieser gebremst wird. Demgemäß kann eine Gefährdung, welche durch die Energieversorgung als solcher ausgeht, abgewendet werden, nicht notwendigerweise jedoch eine Gefährdung, welche durch bewegte Einrichtungen besteht.

Gefahren, welche durch eine Energieversorgung als solcher ausgehen, und Gefahren, welche durch bewegte Einrichtungen ausgehen, können durch ein kombiniertes Not-Halt und Not-Aus-Betätigungselement ausgeschlossen werden. Zu beachten ist auch, dass die einzelnen Bezeichnungen in der Praxis nicht scharf voneinander getrennt werden, sodass die oben beschriebene Zuordnung von Funktionen nicht zwingend gegeben sein muss.

Generell kann das Not-Halt und/oder Not-Aus-Betätigungselement beispielsweise als Not-Halt und/oder Not-Aus-Schalter oder als Not-Halt und/oder Not-Aus-Taster ausgebildet sein. Darunter sind vor allem physische Betätigungselemente zu verstehen, die nur diesem Zweck dienen, zum Beispiel Betätigungselemente mit gelbem Gehäuse und rotem Pilzkopf zur Betätigung. Denkbar wären zum selben Zweck aber auch Schaltflächen auf einem Bildschirm mit zum Beispiel Tast- oder Schaltfunktion, welche mit einer Computer-Maus oder im Fall eines Touchscreens mit dem Finger betätigt werden können.

Günstig ist es, wenn das Kommissioniersystem zusätzlich eine durch das Energieversorgungssystem mit Energie versorgte Sicherheitstechnik aufweist, wobei im Energiesparmodus zumindest ein Teil des Energieversorgungssystems für die Sicherheitstechnik abgeschaltet ist. Eine solche Sicherheitstechnik kann beispielsweise ein Lichtvorhang sein, welcher den Zutritt zu einem Sicherheitsbereich rund um einen Roboter überwacht. Befindet sich ein solcher Lichtvorhang beziehungsweise Sicherheitsbereich in einer Zone im Energiesparmodus, so kann auch diese Sicherheitstechnik gefahrlos deaktiviert werden, da von dem stromlos geschalteten Roboter keine Gefahr ausgeht. Sicherheitstechnik, welche nicht nur auf die abgeschaltete Zone wirkt, kann dagegen eingeschaltet bleiben. Beispielsweise können dies Teile einer Alarmanlage sein, mit welcher das Kommissioniersystem überwacht wird.

Günstig ist es, wenn das Steuersystem
a) alle Fehlermeldungen, insbesondere alle einer Zone zugeordneten Fehlermeldungen, beim Umschalten vom Energiesparmodus in einen Normalbetriebsmodus maskiert, unterdrückt und/oder automatisch quittiert, und/oder
b) alle Fehlerdiagnosefunktionen oder Fehlerbehebungsfunktionen, insbesondere alle einer Zone zugeordneten Fehlerdiagnosefunktionen oder Fehlerbehebungsfunktionen, beim Umschalten vom Energiesparmodus in den Normalbetriebsmodus unterdrückt oder diese automatisch quittiert, und/oder
c) ein Fehlermeldungs-Quittierelement beim Umschalten vom Energiesparmodus in den Normalbetriebsmodus bereitstellt, mittels welchem alle Fehlermeldungen, insbesondere alle einer Zone zugeordneten Fehlermeldungen, gleichzeitig quittierbar sind.

Gleichermaßen ist es günstig, wenn das Steuersystem, insbesondere umfassend das Energiesparmodul, dazu ausgebildet ist, die Schritte a) und/oder b) und/oder c) auszuführen.

Dadurch kann das Umschalten vom Energiesparmodus in den Normalbetriebsmodus mit besonders geringem Aufwand erfolgen.

Günstig ist es alternativ, wenn das Kommissioniersystem
ein Auswahlmodul umfasst, welches eine Auswahl von Fehlermeldungen, Fehlerdiagnosefunktionen oder Fehlerbehebungsfunktionen erfasst, insbesondere eine Auswahl von Fehlermeldungen, Fehlerdiagnosefunktionen oder Fehlerbehebungsfunktionen, welche einer Zone zugeordnet sind, und
wenn das Steuersystem
   a) die ausgewählten Fehlermeldungen beim Umschalten vom Energiesparmodus in einen Normalbetrieb von einem Maskieren, Unterdrücken oder automatischen Quittieren ausnimmt, und/oder
   b) die ausgewählten Fehlerdiagnosefunktionen oder Fehlerbehebungsfunktionen beim Umschalten vom Energiesparmodus in den Normalbetrieb von einem Unterdrücken oder automatischen Quittieren ausnimmt, und/oder
   c) ein Fehlermeldungs-Quittierelement beim Umschalten vom Energiesparmodus in den Normalbetriebsmodus bereitstellt, wobei die ausgewählten Fehlermeldungen von einer gleichzeitigen Quittierung durch das Fehlermeldungs-Quittierelement ausgenommen sind.

Gleichermaßen ist es günstig, wenn das Steuersystem, insbesondere umfassend das Energiesparmodul, dazu ausgebildet ist, die Schritte a) und/oder b) und/oder c) auszuführen.

In einer Eingabemaske des Auswahlmoduls können in den Fällen a) und c) also jene Fehlermeldungen aktiv ausgewählt werden, welche beim Umschalten vom Energiesparmodus in einen Normalbetrieb nicht maskiert, unterdrückt oder automatisch quittiert werden sollen respektive nicht durch das Fehlermeldungs-Quittierelement quittierbar sein sollen, und im Fall b) jene Fehlerdiagnosefunktionen oder Fehlerbehebungsfunktionen, welche beim Umschalten vom Energiesparmodus nicht unterdrückt oder automatisch quittiert werden sollen. Die Punkte a), b) und c) können sich auch auf eine Negativauswahl (d.h. Abwahl) beziehen, beispielsweise wenn in einer Eingabemaske des Auswahlmoduls in den Fällen a) und c) jene Fehlermeldungen aktiv ausgewählt werden, welche beim Umschalten vom Energiesparmodus in einen Normalbetrieb maskiert, unterdrückt oder automatisch quittiert werden sollen respektive durch das Fehlermeldungs-Quittierelement quittierbar sein sollen und im Fall b) jene Fehlerdiagnosefunktionen oder Fehlerbehebungsfunktionen aktiv ausgewählt werden, welche beim Umschalten vom Energiesparmodus unterdrückt oder automatisch quittiert werden sollen.

Günstig ist es, wenn bei den beschriebenen Verfahren im jeweiligen Schritt c) mehrere Fehlermeldungen mittels des bereitgestellten Fehlermeldungs-Quittierelement gleichzeitig, insbesondere durch eine Bedienperson, quittiert werden.

Zum besseren Verständnis der Erfindung wird diese anhand der nachfolgenden Figuren näher erläutert.

Es zeigen jeweils in stark vereinfachter, schematischer Darstellung:
- Fig. 1: ein beispielhaftes Kommissioniersystem in Draufsicht;
- Fig. 2: eine etwas detailliertere schematische Darstellung eines Teils des Kommissioniersystems inklusive dessen elektrische Versorgung;
- Fig. 3: wie Fig. 2, nur mit einem Not-Halt- und/oder Not-Aus-Betätigungselement in der Versorgungsleitung;
- Fig. 4: ein Schaltbild einer beispielhaften Spannungsüberwachungseinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

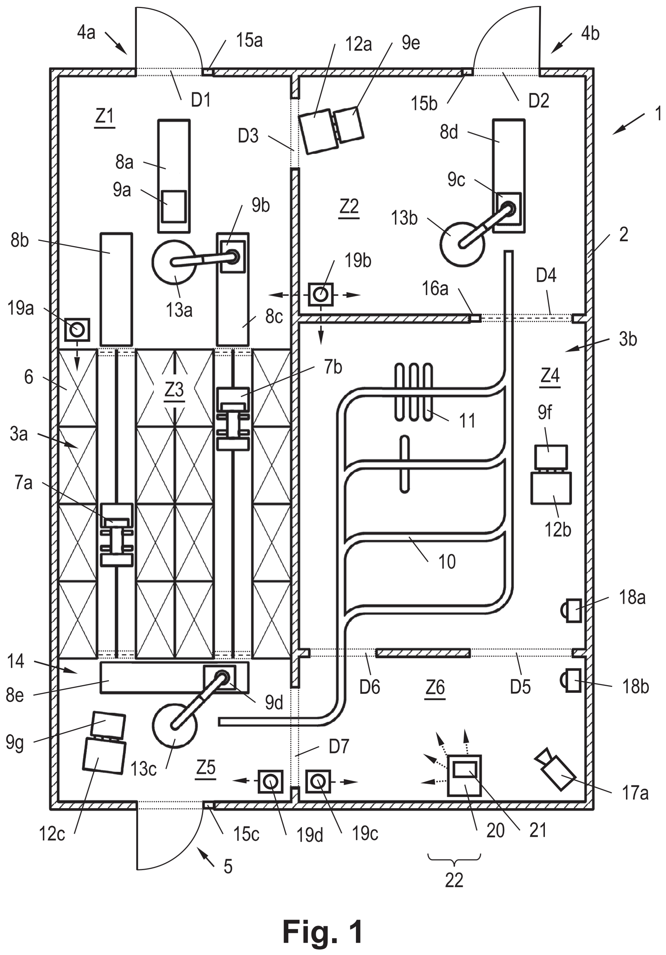

Fig. 1 zeigt schematisch ein beispielhaftes Kommissioniersystem 1 in Draufsicht. Das Kommissioniersystem 1 befindet sich in einem Gebäude und weist mehrere Wände 2 auf. Das Kommissioniersystem 1 kann weiterhin ein Warenlager 3a für Liegeware und/oder ein Warenlager 3b für Hängeware umfassen. Das Vorsehen zweier verschiedener Warenlager 3a, 3b ist aber nicht zwingend und rein beispielhaft zu verstehen. Zudem umfasst das Kommissioniersystem 1 vorzugsweise Wareneingänge 4a, 4b sowie einen Warenausgang 5. Im Warenlager 3a sind mehrere Regale 6 und dazwischen verfahrende Regalbediengeräte 7a, 7b vorgesehen. Zwischen dem Wareneingang 4a und dem Warenlager 3a befinden sich mehrere Förderbahnen 8a..8c. Im Bereich des Wareneingangs 4b befindet sich eine weitere Förderbahn 8d. Zwischen dem Warenlager 3a und dem Warenausgang 5 befindet sich schließlich eine Förderbahn 8e. Rein beispielhaft befinden sich Liegewaren 9a..9d auf den Förderbahnen 8a, 8b, 8d und 8e. Das Warenlager 3b umfasst eine Hängeförderbahn 10, auf denen Hängewaren 11 gelagert und/oder transportiert werden können. Das Warenlager 3b ist fördertechnisch mit der Förderbahn 8d und der Förderbahn 8e verbunden. Das Kommissioniersystem 1 kann weiterhin mehrere autonome Flurförderfahrzeuge 12a..12c umfassen, die beispielhaft die Waren 9e..9g transportieren. Darüber hinaus umfasst das Kommissioniersystem 1 mehrere Roboter 13a..13c, die zum Manipulieren der Liegewaren 9a..9g und/oder zum Manipulieren der Hängewaren 11 vorgesehen sind. Konkret bildet der Roboter 13a die fördertechnische Verbindung zwischen den Förderbahnen 8a..8c und den Flurförderfahrzeugen 12a..12c, der Roboter 13b die fördertechnische Verbindung zwischen der Förderbahn 8d, der Hängeförderbahn 10 und den Flurförderfahrzeugen 12a..12c, und der Roboter 13c die fördertechnische Verbindung zwischen der Förderbahn 9d, der Hängeförderbahn 10 und den Flurförderfahrzeugen 12a..12c.

Liegewaren 9e..9g können über den Wareneingang 4a angeliefert, mit Hilfe der Förderbahn 8a zum Roboter 13a transportiert und von dort auf die Förderbahnen 8b, 8c umgeladen werden. Auf den Förderbahnen 8b, 8c können die Liegewaren 9e..9g zum Lager 3a transportiert und dort mit Hilfe der Regalbediengeräte 7a, 7b in die Lagerregale 6 eingelagert werden. In ähnlicher Weise können Hängewaren 11 am Wareneingang 4b angeliefert, mit Hilfe der Förderbahn 8d zum Roboter 13b transportiert und von dort auf die Hängeförderbahn 10 umgeladen werden. In Folge können die Hängewaren 11 auf der Hängeförderbahn 10 zum Lager 3b transportiert und dort eingelagert werden. Darüber hinaus können Liegewaren 9e..9g und Hängewaren 11 auch mit Hilfe der Flurförderfahrzeuge 12a..12c von den Wareneingängen 4a, 4b zu einer der Förderbahnen 8a..8d, zu einem der Roboter 13a, 13b, in die Lagerbereiche 3a, 3b oder auch zum Warenausgang 5 transportiert werden.

Beim Kommissionieren von (Kunden)aufträgen werden die benötigten Liegewaren 9e..9g mit Hilfe der Regalbediengeräte 7a, 7b aus den Lagerregalen 6 ausgelagert, mit Hilfe der Förderbahn 9d zum Roboter 13c transportiert und von diesem zu einer Versandeinheit kommissioniert. In gleicher Weise können Hängewaren 11 über die Hängeförderbahn 10 zum Roboter 13c transportiert und von diesem zu einer Versandeinheit kommissioniert werden. Zudem ist auch möglich, dass Liegewaren 9e..9g und/oder Hängewaren 11 mit Hilfe der Flurförderfahrzeuge 12a..12c von den Wareneingängen 4a, 4b direkt zum Roboter 13c transportiert und von diesem zu einer Versandeinheit kommissioniert werden.

Die obigen Abläufe sind an sich bekannt und werden daher nicht detaillierter beschrieben.

Bevorzugt ist das Kommissioniersystem 1 in mehrere Zonen Z1..Z6 unterteilt, wie dies in Fig. 1 beispielhaft dargestellt ist. Insbesondere können die Zonen Z1..Z6 über die Wareneingänge 4a, 4b, den Warenausgang 5 sowie die Durchgänge D1..D7 betreten und verlassen werden. Die Zonen Z1, Z2 bilden Wareneingangsbereiche, die Zonen Z3, Z4 bilden Lagerbereiche, die Zone Z5 bildet einen Kommissionierbereich beziehungsweise eine Kommissionierstation 14 und die Zone Z6 bildet einen allgemeinen Waren-Manipulationsbereich.

Bei einer Tür können, so wie dies für die Türen an den Wareneingängen 4a, 4b und dem Warenausgang 5 beispielhaft dargestellt ist, Türschalter 15a..15c vorgesehen sein. So kann mit Hilfe des jeweiligen Türschalters 15a..15c ein Öffnen der jeweiligen Tür detektiert werden. Insbesondere kann mit Hilfe des Türschalters 15a ein Öffnen der Tür am Wareneingang 4a, mit Hilfe des Türschalters 15b ein Öffnen der Tür am Wareneingang 4b und mit Hilfe des Türschalters 15c ein Öffnen der Tür am Warenausgang 5 detektiert werden.

Denkbar ist weiterhin, dass an den Durchgängen D1..D7 eine Lichtschranke oder ein Lichtgitter 16a vorgesehen ist, so wie das in der Fig. 1 am Durchgang D4 der Fall ist. Mit Hilfe der in Fig. 1 dargestellten Lichtschranke oder des Lichtgitters 16a kann ein Zutritt zu oder ein Verlassen der Zonen Z2, Z4 erkannt werden. Im Allgemeinen kann mit der jeweiligen Lichtschranke oder des jeweiligen Lichtgitters 16a ein Zutritt zu oder ein Verlassen der jeweiligen Zone Z1..Z7 erkannt werden. Zusätzlich kann die Zone Z3 mit Lichtschranken oder Lichtgittern abgesichert sein, wodurch ein Zutritt zu oder ein Verlassen der Zonen Z1, Z3 oder Z3, Z5 erkannt werden kann.

Darüber hinaus kann in den Zonen Z1..Z7 jeweils eine oder mehrere Überwachungskameras 17a angebracht sein, wie dies beispielhaft für die Zone Z6 dargestellt ist. Weiterhin können in den Zonen Z1..Z6 Bewegungsmelder 18a, 18b angeordnet sein, wie dies in Fig. 1 beispielhaft für die Zonen Z4, Z6 gezeigt ist. Mit Hilfe der Überwachungskamera 17a und des Bewegungsmelders 18b kann eine Person, ein Tier oder eine sonstige Bewegung in der Zone Z6 detektiert werden. Mit Hilfe des Bewegungsmelders 18a kann eine Person, ein Tier oder eine sonstige Bewegung in der Zone Z4 detektiert werden.

Weiterhin kann das Kommissioniersystem 1 mehrere Not-Halt- und/oder Not-Aus-Betätigungselemente 19a..19d umfassen, wobei mit Pfeilen angegeben ist, auf welche Zonen Z1..Z6 sie wirken. Im dargestellten Beispiel wirkt das Not-Halt- und/oder Not-Aus-Betätigungselement 19a auf die Zone Z3, das Not-Halt- und/oder Not-Aus-Betätigungselement 19b auf die Zonen Z1, Z2, Z4, das Not-Halt- und/oder Not-Aus-Betätigungselement 19c auf die Zone Z6 und das Not-Halt- und/oder Not-Aus-Betätigungselement 19d auf die Zone Z5.

Schließlich umfasst das Kommissioniersystem 1 eine Steuerung 20 mit einem Energiesparmodul 21. Die Steuerung 20 kann mit Einrichtungen im Kommissioniersystem 1 drahtgebunden und/oder drahtlos kommunizieren, so wie das in der Fig. 1 mit Pfeilen angedeutet ist. Die Steuerung 20 bildet gemeinsam mit den Kommunikationskanälen beziehungsweise Kommunikationsleitungen ein Steuersystem 22. Das Energiesparmodul 21 kann generell Software und/oder Hardware umfassen und insbesondere als Leitrechner oder als Teil eines Leitrechners des Steuersystems 22 ausgebildet sein.

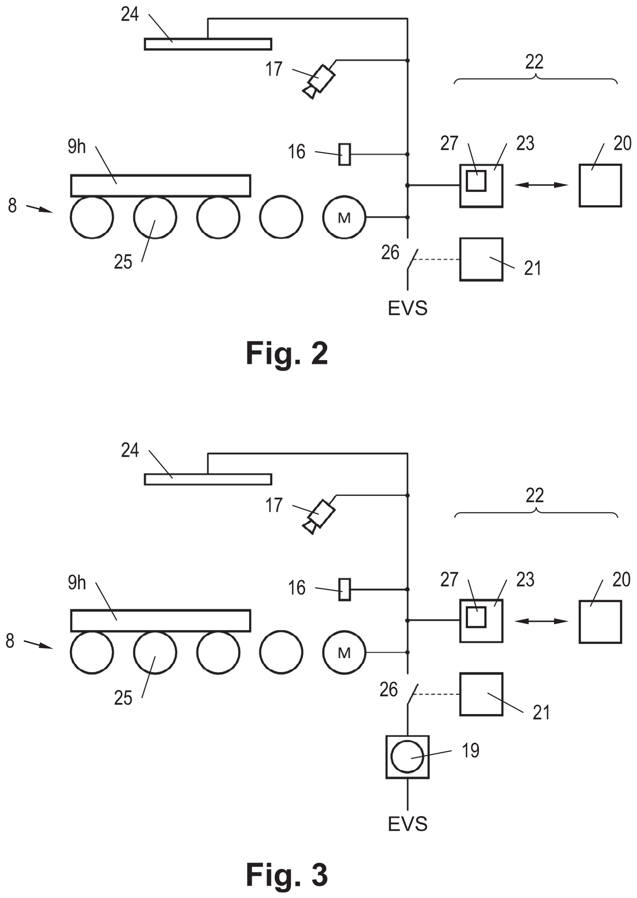

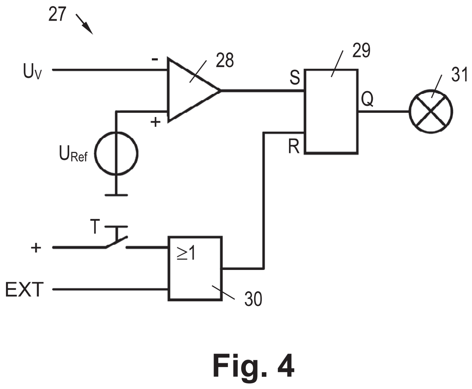

Fig. 2 zeigt eine etwas detailliertere schematische Darstellung eines Teils des Kommissioniersystems 1 in Seitenansicht, insbesondere den elektrischen Anschluss eines Submoduls 23 des Steuersystems 22, einer beispielhaften Förderbahn 8, einer Lichtschranke 16, einer Kamera 17 und einer Beleuchtung 24. Im dargestellten Beispiel sind das Submodul 23, der Antrieb M für Förderrollen 25 der Förderbahn 8, die Lichtschranke 16, die Kamera 17 und die Beleuchtung 24 über einen Schalter 26 mit einem Energieversorgungssystem EVS, insbesondere mit einem Stromnetz, verbunden. Der Schalter 26 wird dabei von der Steuerung 20, konkret dessen Energiesparmodul 21 angesteuert. Der Schalter 26 kann insbesondere als Relais oder Schütz ausgebildet sein. Über entsprechende Schaltbefehle vom Steuersystem, insbesondere umfassend das Energiesparmodul 21, kann der Schalter 26 ein- oder ausgeschaltet werden. Die funktionale Verbindung zwischen Steuersystem, insbesondere umfassend das Energiesparmodul 21, und Schalter 26 kann dabei drahtgebunden oder drahtlos realisiert sein. Das Submodul 23 des Steuersystems 22 umfasst in diesem Beispiel auch eine optionale Spannungsüberwachungseinrichtung 27 (siehe auch Fig. 4). Eine drahtgebundene oder drahtlose Kommunikation zwischen dem Submodul 23 und der Steuerung 20 ist in der Fig. 2 mit einem Doppelpfeil symbolisiert. An dieser Stelle wird auch angemerkt, dass in der Fig. 2 die elektrische Versorgung beziehungsweise der Anschluss an das Energieversorgungssystem EVS im Vordergrund steht und Kommunikationskanäle zwischen dem Submodul 23 und der Lichtschranke 16, der Kamera 17 und dem Antrieb M nicht explizit dargestellt sind, in der Realität jedoch vorhanden sein können.

Allgemein umfasst das Kommissioniersystem 1 also unter anderem ein Warenlager 3a, 3b, eine Kommissionierstation 14, eine Fördertechnik zum Transportieren von Waren 9e..9g, 11 zwischen dem Warenlager 3a, 3b und der Kommissionierstation 14, welche in diesem Beispiel insbesondere die Förderbahnen 8, 8a..8c, die Hängeförderbahn 10 und die Flurförderfahrzeuge 12a..12c umfasst, ein Antriebssystem für die Fördertechnik 8, 8a..8c, 10, 12a..12c, welche in diesem Beispiel den Antrieb M umfasst beziehungsweise durch den Antrieb M symbolisiert ist, das Steuersystem 22 für die Fördertechnik 8, 8a..8c, 10, 12a..12c und das Energieversorgungssystem EVS, welches unter anderem dazu eingerichtet ist, das Antriebssystem M und das Steuersystem 22 mit Energie zu versorgen.

Das Steuersystem 22, insbesondere dessen Energiesparmodul 21, ist allgemein dazu eingerichtet, das Kommissioniersystem 1 oder Teile davon aus einem Normalbetriebsmodus in einen Energiesparmodus und aus dem Energiesparmodus in den Normalbetriebsmodus zu schalten, wobei im Energiesparmodus zumindest ein Teil des Energieversorgungssystems EVS abgeschaltet ist.

Um ein automatisches Hochfahren des Kommissioniersystems 1 bei einem Umschalten vom Energiesparmodus in den Normalbetriebsmodus zu ermöglichen, ist das Steuersystem, insbesondere umfassend das Energiesparmodul 21, weiter dazu ausgebildet,
a) Fehlermeldungen beim Umschalten vom Energiesparmodus in den Normalbetriebsmodus zu maskieren, zu unterdrücken oder automatisch zu quittieren, und/oder
b) Fehlerdiagnosefunktionen oder Fehlerbehebungsfunktionen beim Umschalten vom Energiesparmodus in den Normalbetriebsmodus zu unterdrücken oder automatisch zu quittieren, und/oder
c) ein Fehlermeldungs-Quittierelement beim Umschalten vom Energiesparmodus in den Normalbetriebsmodus bereitzustellen, mittels welchem mehrere Fehlermeldungen gleichzeitig quittierbar sind.

Dadurch kann das Kommissioniersystem 1 leicht vom Energiesparmodus in den Normalbetriebsmodus übergeführt werden kann, ohne dass dazu aufwändige Hochlauf-Prozeduren durchlaufen werden müssen und ohne dass dazu umfangreiche Eingriffe seitens des Bedienpersonals für das Kommissioniersystem 1 nötig wären. Konkret wird ein automatisches oder automatisiertes Hochfahren des Kommissioniersystems 1 bei einem Umschalten vom Energiesparmodus in den Normalbetriebsmodus ermöglicht. Daher kann das Kommissioniersystem 1 auch für relativ kurze Zeitspannen in einen Energiesparmodus versetzt werden, ohne dass dies große Störungen im Kommissionierablauf nach sich ziehen würde.

Wie in Fig. 1 dargestellt, kann das Kommissioniersystem 1 in räumlich begrenzte Zonen Z1..Z6 eingeteilt sein. Generell kann eine Zone Z1..Z6 eine virtuelle Begrenzung aufweisen, sie kann aber, so wie das in der Fig. 1 dargestellt ist, ganz oder teilweise durch bauliche Maßnahmen begrenzt sein, wobei ein Zutritt zu der Zone Z1..Z6 durch eine Person nur an einem der Wareneingänge 4a, 4b, am Warenausgang 5 oder an einem Durchgang D1..D7 ermöglicht ist. Solche baulichen Maßnahmen sind beispielsweise die Wände 2. Grundsätzlich können aber auch andere Einrichtungen im Kommissioniersystem 1 vorgesehen sein, die von Personen nicht passiert werden können oder zumindest nicht für ein Passieren einer Person vorgesehen sind. So sind zum Beispiel Gerüste und ähnliches, die zwar prinzipiell durch- oder überklettert werden können, jedoch nicht dafür vorgesehen sind, bauliche Maßnahmen, die nicht für ein Passieren einer Person vorgesehen sind.

Im Normalbetriebsmodus sind die Zonen Z1..Z6 jeweils durch das Energieversorgungssystem EVS mit Energie versorgt. Mit Hilfe des Steuersystem, insbesondere umfassend das Energiesparmodul 21, können bei dieser Ausführungsvariante eine, mehrere oder alle Zonen Z1..Z6 der Zonen Z1..Z6 bedarfsweise aus dem Normalbetriebsmodus in den Energiesparmodus und aus dem Energiesparmodus in den Normalbetriebsmodus geschaltet werden. Im Energiesparmodus ist dabei zumindest jener Teil des Energieversorgungssystems EVS abgeschaltet, welcher die jeweilige Zone Z1..Z6 oder jeweiligen Zonen Z1..Z6 mit Energie versorgt. Weiterhin ist das Steuersystem, insbesondere umfassend das Energiesparmodul 21, bei dieser Ausführungsvariante dazu ausgebildet,
a) der Zone Z1..Z6 zugeordnete Fehlermeldungen beim Umschalten der Zone Z1..Z6 vom Energiesparmodus in den Normalbetriebsmodus zu maskieren, zu unterdrücken oder automatisch zu quittieren, und/oder
b) der Zone Z1..Z6 zugeordnete Fehlerdiagnosefunktionen oder Fehlerbehebungsfunktionen beim Umschalten der Zone Z1..Z6 vom Energiesparmodus in den Normalbetriebsmodus zu unterdrücken oder automatisch zu quittieren, und/oder
c) ein Fehlermeldungs-Quittierelement beim Umschalten vom Energiesparmodus in den Normalbetriebsmodus bereitzustellen, mittels welchem mehrere der Zone Z1..Z6 zugeordnete Fehlermeldungen gleichzeitig quittierbar sind.

Das Steuersystem, insbesondere umfassend das Energiesparmodul 21, kann generell mehrere Energie-Schaltmodule umfassen, welche jeweils einer Zone Z1..Z6 der Zonen Z1..Z6 zugeordnet sind und dazu ausgebildet sind, die jeweilige Zone Z1..Z6 bedarfsweise aus dem Normalbetriebsmodus in den Energiesparmodus und aus dem Energiesparmodus in den Normalbetriebsmodus zu schalten. Diese Energie-Schaltmodule können drahtlos oder drahtgebunden mit einem Zentralteil des Energiesparmoduls 21 kommunizieren. Der dezentrale Ansatz ist dabei ähnlich dem mit den Submodulen 23 des Steuersystems 22 verfolgten Ansatz. Demzufolge könnte in der Fig. 2 ein Energie-Schaltmodul an die Stelle des Energiesparmoduls 21 treten und zum Schalten des Schalters 26 eingerichtet sein.

Vorteilhaft ist es weiterhin, wenn das Kommissioniersystem 1 eine Integritäts-Überwachungseinrichtung umfasst, die dazu ausgebildet ist, eine Integrität der Zone Z1..Z6 im Energiesparmodus zu überwachen, wobei die Integrität der Zone Z1..Z6 zumindest dann verletzt wird, wenn die Integritäts-Überwachungseinrichtung einen Zutritt einer Person zu der Zone Z1..Z6 detektiert. In dem in Fig. 1 dargestellten Beispiel umfasst die Integritäts-Überwachungseinrichtung insbesondere die Türschalter 15a..15c, die Lichtschranke oder das Lichtgitter 16a, 16b, die Überwachungskamera 17a, 17 und die Bewegungsmelder 18a, 18b. Mit diesen Einrichtungen kann der Zutritt einer Person zu einer Zone Z1..Z6 erkannt werden.

Das Steuersystem 22, insbesondere umfassend das Energiesparmodul 21, kann nun weiter dazu ausgebildet sein,
a) der Zone Z1..Z6 zugeordnete Fehlermeldungen beim Umschalten der Zone Z1..Z6 vom Energiesparmodus in den Normalbetriebsmodus an einer Ausgabevorrichtung (beispielsweise einem Bildschirm des Steuersystems 22, insbesondere umfassend das Energiesparmoduls 21) anzuzeigen, wenn die Integrität der Zone Z1..Z6 beim genannten Umschalten verletzt ist, und zu maskieren, zu unterdrücken oder automatisch zu quittieren, wenn die Integrität der Zone Z1..Z6 beim genannten Umschalten unversehrt ist, und/oder
b) der Zone Z1..Z6 zugeordnete Fehlerdiagnosefunktionen oder Fehlerbehebungsfunktionen beim Umschalten der Zone Z1..Z6 vom Energiesparmodus in den Normalbetriebsmodus auszuführen, wenn die Integrität der Zone Z1..Z6 beim genannten Umschalten verletzt ist, und deren Ausführung zu unterdrücken oder diese automatisch zu quittieren, wenn die Integrität der Zone Z1..Z6 beim genannten Umschalten unversehrt ist, und/oder
c) der Zone Z1..Z6 zugeordnete Fehlermeldungen beim Umschalten der Zone Z1..Z6 vom Energiesparmodus in den Normalbetriebsmodus an einer Ausgabevorrichtung (beispielsweise einem Bildschirm des Steuersystems 22, insbesondere umfassend das Energiesparmoduls 21) anzuzeigen, wenn die Integrität der Zone Z1..Z6 beim genannten Umschalten verletzt ist, und ein Fehlermeldungs-Quittierelement beim Umschalten vom Energiesparmodus in den Normalbetriebsmodus bereitzustellen, mittels welchem mehrere der Zone Z1..Z6 zugeordnete Fehlermeldungen gleichzeitig quittierbar sind, wenn die Integrität der Zone Z1..Z6 beim genannten Umschalten unversehrt ist.

Bei dieser Ausführungsvariante wird davon ausgegangen, dass der Zone Z1..Z6 zugeordnete Fehlermeldungen beziehungsweise der Zone Z1..Z6 zugeordnete Fehlerdiagnosefunktionen oder Fehlerbehebungsfunktionen bedeutungslos sind, wenn die Integrität der Zone Z1..Z6 beim genannten Umschalten unversehrt ist, das heißt, wenn die Zone Z1..Z6 im Energiesparmodus beispielsweise nicht von einer Person betreten wurde. Dementsprechend werden Fehlermeldungen, welche im Energiesparmodus auftreten, beim Umschalten vom Energiesparmodus in den Normalbetriebsmodus bei unversehrter Integrität der Zone Z1..Z6 maskiert, unterdrückt und/oder automatisch quittiert oder können auf einfache Weise durch Betätigen des Fehlermeldungs-Quittierelements quittiert werden. Gleichermaßen werden Fehlerdiagnosefunktionen, welche im Energiesparmodus auftreten, beim Umschalten vom Energiesparmodus in den Normalbetriebsmodus bei unversehrter Integrität der Zone Z1..Z6 unterdrückt oder automatisch quittiert. Dadurch wird das Umschalten vom Energiesparmodus in den Normalbetriebsmodus für das Bedienpersonal des Kommissioniersystems 1 wesentlich erleichtert.

Beispielsweise kann in der Integritäts-Überwachungseinrichtung ein Flag oder Statusbit gesetzt werden oder ein Schaltelement eingeschaltet werden, wenn die Integrität der Zone Z1..Z6 verletzt wird. In letzterem Fall kann eine Verletzung der Integrität beispielsweise durch einen bestimmten Spannungspegel oder ein bestimmtes Signal angezeigt werden. Die Integritäts-Überwachungseinrichtung kann sowohl in Software als auch in Hardware ausgebildet sein und demzufolge ein Computer-Programm und/oder eine elektronische Schaltung aufweisen.

Die Fig. 3 zeigt eine Vorrichtung, welcher der in Fig. 2 dargestellten Vorrichtung sehr ähnlich ist. Im Unterschied dazu weist die in Fig. 3 dargestellte Vorrichtung zusätzlich ein Not-Halt- und/oder Not-Aus-Betätigungselement 19 auf, mit welchem der Antrieb M für Förderrollen 25 der Förderbahn 8, die Lichtschranke 16 und hier auch die Kamera 17 und die Beleuchtung 24 im Notfall beispielsweise stromlos geschaltet werden kann, beispielsweise wenn eine Bedienperson einen gravierenden Fehler in den Abläufen im Kommissioniersystem 1 wahrnimmt. Das Not-Halt- und/oder Not-Aus-Betätigungselement 19 ist dabei in Serie zum Schalter 26 angeordnet.

In einer Ausführungsvariante kann vorgesehen sein, dass die Integrität der Zone Z1..Z6 verletzt ist und verletzt bleibt, wenn das Not-Halt- und/oder Not-Aus-Betätigungselement 19 gedrückt wird, selbst wenn das Not-Halt- und/oder Not-Aus-Betätigungselement 19 wieder entriegelt wird. Bei dieser Ausführungsvariante führt die Betätigung des Not-Halt- und/oder Not-Aus-Betätigungselements 19 in jedem Fall zur Verletzung der Integrität der Zone Z1..Z6, da dessen Betätigung bei nicht missbräuchlicher Betätigung stets Folge einer wahrgenommenen Gefahr ist.

In einer anderen Ausführungsvariante ist vorgesehen, dass die Integrität der Zone Z1..Z6 nur so lange verletzt ist, solange das Not-Halt- und/oder Not-Aus-Betätigungselement 19 gedrückt oder eingerastet ist. In diesem Fall wird davon ausgegangen, dass die Betätigung des Not-Halt- und/oder Not-Aus-Betätigungselements 19 nur so lange von Bedeutung ist, solange dieser gedrückt oder eingerastet ist, und eine wahrgenommene Gefahr nicht länger relevant ist, wenn das Not-Halt- und/oder Not-Aus-Betätigungselement 19 losgelassen oder entriegelt wird.

Denkbar ist auch, dass ein Integritäts-Quittierelement vorgesehen ist, welches eine verletzte Integrität der Zone Z1..Z6 bei Betätigung rücksetzt. Dadurch wird Personen, welche eine Zone Z1..Z6 in einem Energiesparmodus betreten, jedoch gewährleisten, dass keine Änderungen in der Zone Z1..Z6 vorgenommen wurden, die Möglichkeit gegeben, eine verletzte Integrität rückzusetzen. Beispielsweise kann eine solche Person ein Nachtportier sein, der in einer Zone Z1..Z6 Nachsicht hält. Das Integritäts-Quittierelement kann Teil des Steuersystems 22 sein und beispielsweise als Quittiertaste oder Quittierfunktion ausgebildet und sowohl in Software als auch in Hardware ausgeführt sein.

Wie bereits erwähnt, kann vorgesehen sein, dass das Steuersystem 22 ein Submodul 23 mit einer Spannungsüberwachungseinrichtung 27 umfasst, welche dazu ausgebildet ist, einen Ausfall einer Versorgungsspannung für das Submodul 23 zu detektieren und auch nach einem Wiedereinschalten der Versorgungsspannung mittels einer Fehlermeldung anzuzeigen. Auf diese Weise soll verhindert werden, dass es durch kurzfristigen Wegfall der Versorgungsspannung zu unerklärlichen Fehlern im betreffenden Teil des Steuersystems 22 kommt. Stattdessen ist ein Ausfall einer Versorgungsspannung jederzeit nachvollziehbar, auch wenn er nur kurzfristig ist.

Fig. 4 zeigt eine mögliche Realisierung einer solchen Spannungsüberwachungseinrichtung 27. Die Spannungsüberwachungseinrichtung 27 umfasst einen Schwellwertschalter 28, ein RS-Flip-Flop 29, ein ODER-Gatter 30 und eine Signallampe 31.

An den negativen Eingang des Schwellwertschalters 28 ist eine Versorgungsspannung Uv für das Submodul 23 geführt. Diese wird mit einer an den positiven Eingang des Schwellwertschalters 28 geführte Referenzspannung URef verglichen. Sinkt die Versorgungsspannung Uv unter die Referenzspannung URef dann führt dies zu einer positiven Flanke am Ausgang des Schwellwertschalters 28 und damit zu einer positiven Flanke am Set-Eingang S des RS-Flip-Flops 29. Dadurch wird das RS-Flip-Flop 29 gesetzt und es kommt zu einem positiven Ausgangsignal am Ausgang Q des RS-Flip-Flops 29, wodurch die Signallampe 31 leuchtet. Daran ändert auch ein Ansteigen der Versorgungsspannung Uv über die Referenzspannung URef nichts, da das RS-Flip-Flop 29 auch dann seinen Schaltzustand beibehält. Das RS-Flip-Flop 29 kann in diesem Beispiel nur durch einen Druck auf die Taste T oder ein externes Quittiersignal EXT wieder rückgesetzt werden. Dazu sind ein von der Taste T stammendes Schaltsignal und das externes Quittiersignal EXT an den Eingang des ODER-Gatters 30 geführt. Der Ausgang des ODER-Gatters 30 ist an den Reset-Eingang R des RS-Flip-Flops 29 geführt, wodurch dieses wieder rückgesetzt werden kann und wodurch in Folge auch die Signallampe 31 erlischt. Ein einmalig erkannter Abfall der Versorgungsspannung Uv wird also bis zum Quittieren des Fehlers angezeigt. Die Fig. 4 soll dabei lediglich die logische Funktion einer solchen Spannungsüberwachungseinrichtung 27 verdeutlichen, selbstverständlich kann diese auch auf andere Weise realisiert sein und insbesondere Bestandteile in Software aufweisen. An dieser Stelle wird angemerkt, dass das Quittiersignal EXT nicht mit dem Integritäts-Quittierelement zum Rücksetzen einer verletzten Integrität einer Zone Z1..Z6 verwechselt oder gleichgesetzt werden sollte und stattdessen nur die Anzeige eines erkannten Ausfalls oder Rückgangs der Versorgungsspannung Uv rücksetzt.

Das Steuersystem 22, insbesondere umfassend das Energiesparmodul 21, ist nun weiter dazu ausgebildet,
a) Fehlermeldungen betreffend den genannten Ausfall der Versorgungsspannung Uv beim Umschalten vom Energiesparmodus in den Normalbetriebsmodus zu maskieren, zu unterdrücken und/oder automatisch zu quittieren, und/oder
b) Fehlerdiagnosefunktionen betreffend den genannten Ausfall der Versorgungsspannung Uv beim Umschalten vom Energiesparmodus in den Normalbetriebsmodus zu unterdrücken oder diese automatisch zu quittieren, und/oder
c) ein Fehlermeldungs-Quittierelement beim Umschalten vom Energiesparmodus in den Normalbetriebsmodus bereitzustellen, mittels welchem mehrere Fehlermeldungen betreffend den genannten Ausfall der Versorgungsspannung Uv gleichzeitig quittierbar sind.

Dadurch werden Fehlermeldungen, welche auf einen durch das Umschalten in den Energiesparmodus bewusst herbeigeführten Ausfall der Versorgungsspannung Uv zurückzuführen sind, beim Umschalten vom Energiesparmodus in den Normalbetriebsmodus maskiert, unterdrückt und/oder automatisch quittiert oder können auf einfache Weise durch Betätigen des Fehlermeldungs-Quittierelements quittiert werden. Gleichermaßen werden Fehlerdiagnosefunktionen, welche auf einen bewusst herbeigeführten Ausfall der Versorgungsspannung Uv zurückzuführen sind, beim Umschalten vom Energiesparmodus in den Normalbetriebsmodus unterdrückt oder automatisch quittiert. Dementsprechend wird das Umschalten vom Energiesparmodus in den Normalbetriebsmodus für das Bedienpersonal des Kommissioniersystems 1 wesentlich erleichtert. Beispielsweise kann das externe Signal EXT vom Steuersystem 22, insbesondere umfassend das Energiesparmodul 21, dazu automatisch erzeugt werden. Denkbar ist auch, dass die im Zusammenhang mit einer Abschaltung einer Zone Z1..Z6 sowie die im Zusammenhang mit einer Spannungsüberwachungseinrichtung vorgeschlagenen Maßnahmen kombiniert werden. Es resultiert dann ganz allgemein ein Kommissioniersystem 1,
bei dem das Steuersystem 22 ein Submodul 23 mit einer Spannungsüberwachungseinrichtung 27 umfasst, welche dazu ausgebildet ist, einen Ausfall einer Versorgungsspannung Uv für das Submodul 23 zu detektieren und auch nach einem Wiedereinschalten der Versorgungsspannung Uv mittels einer Fehlermeldung anzuzeigen, und
bei dem das Steuersystem 22, insbesondere umfassend das Energiesparmodul 21, dazu ausgebildet ist,
   a) der Zone Z1..Z6 zugeordnete Fehlermeldungen betreffend den genannten Ausfall der Versorgungsspannung Uv beim Umschalten der Zone Z1..Z6 vom Energiesparmodus in einen Normalbetriebsmodus zu maskieren, zu unterdrücken und/oder automatisch zu quittieren, und/oder
   b) der Zone Z1..Z6 zugeordnete Fehlerdiagnosefunktionen betreffend den genannten Ausfall der Versorgungsspannung Uv beim Umschalten der Zone Z1..Z6 vom Energiesparmodus in den Normalbetriebsmodus zu unterdrücken oder diese automatisch zu quittieren, und/oder
   c) ein Fehlermeldungs-Quittierelement beim Umschalten vom Energiesparmodus in den Normalbetriebsmodus bereitzustellen, mittels welchem mehrere der Zone Z1..Z6 zugeordnete Fehlermeldungen betreffend den genannten Ausfall der Versorgungsspannung Uv gleichzeitig quittierbar sind.

Denkbar ist weiterhin, dass die zur Integritäts-Überwachungseinrichtung vorgeschlagenen Maßnahmen und die im Zusammenhang mit einer Spannungsüberwachungseinrichtung 27 vorgeschlagenen Maßnahmen kombiniert werden. Es resultiert dann ganz allgemein ein Kommissioniersystem 1, bei dem
das Kommissioniersystem 1 eine Integritäts-Überwachungseinrichtung umfasst, die dazu ausgebildet ist, eine Integrität der Zone Z1..Z6 im Energiesparmodus zu überwachen, wobei die Integrität der Zone Z1..Z6 zumindest dann verletzt wird, wenn die Integritäts-Überwachungseinrichtung einen Zutritt einer Person zu der Zone Z1..Z6 detektiert, und
das Steuersystem ein Submodul 23 mit einer Spannungsüberwachungseinrichtung 27 umfasst, welche dazu ausgebildet ist, einen Ausfall einer Versorgungsspannung Uv für das Submodul 23 zu detektieren und auch nach einem Wiedereinschalten der Versorgungsspannung Uv mittels einer Fehlermeldung anzuzeigen.

Wie bereits erwähnt kann die Integritäts-Überwachungseinrichtung insbesondere die Türschalter 15a..15c, die Lichtschranke oder das Lichtgitter 16a, 16b, die Überwachungskamera 17a, 17 und die Bewegungsmelder 18a, 18b umfassen

In einer Ausführungsvariante kann vorgesehen sein, dass das Steuersystem, insbesondere umfassend das Energiesparmodul, dazu ausgebildet ist,
a) der Zone Z1..Z6 zugeordnete Fehlermeldungen inklusive Fehlermeldungen betreffend den genannten Ausfall der Versorgungsspannung Uv beim Umschalten der Zone Z1..Z6 vom Energiesparmodus in einen Normalbetriebsmodus anzuzeigen, wenn die Integrität der Zone Z1..Z6 beim genannten Umschalten verletzt ist, und zu maskieren, zu unterdrücken oder automatisch zu quittieren, wenn die Integrität der Zone Z1..Z6 beim genannten Umschalten unversehrt ist, und/oder
b) der Zone Z1..Z6 zugeordnete Fehlerdiagnosefunktionen oder Fehlerbehebungsfunktionen inklusive Fehlerdiagnosefunktionen betreffend den genannten Ausfall der Versorgungsspannung Uv beim Umschalten der Zone Z1..Z6 vom Energiesparmodus in den Normalbetriebsmodus auszuführen, wenn die Integrität der Zone Z1..Z6 beim genannten Umschalten verletzt ist, und deren Ausführung zu unterdrücken oder diese automatisch zu quittieren, wenn die Integrität der Zone Z1..Z6 beim genannten Umschalten unversehrt ist, und/oder
c) der Zone Z1..Z6 zugeordnete Fehlermeldungen inklusive Fehlermeldungen betreffend den genannten Ausfall der Versorgungsspannung Uv beim Umschalten der Zone Z1..Z6 vom Energiesparmodus in einen Normalbetriebsmodus anzuzeigen, wenn die Integrität der Zone Z1..Z6 beim genannten Umschalten verletzt ist, und ein Fehlermeldungs-Quittierelement beim Umschalten vom Energiesparmodus in den Normalbetriebsmodus bereitzustellen, mittels welchem mehrere der Zone Z1..Z6 zugeordnete Fehlermeldungen inklusive Fehlermeldungen betreffend den genannten Ausfall der Versorgungsspannung Uv gleichzeitig quittierbar sind, wenn die Integrität der Zone Z1..Z6 beim genannten Umschalten unversehrt ist. Bei dieser Ausführungsvariante werden die Fehlermeldungen betreffend den genannten Ausfall der Versorgungsspannung Uv gleich behandelt werden wie alle anderen Fehlermeldungen.

In einer alternativen Ausführungsvariante kann auch vorgesehen sein, dass das Steuersystem, insbesondere umfassend das Energiesparmodul, dazu ausgebildet ist,
a) der Zone Z1..Z6 zugeordnete Fehlermeldungen exklusive Fehlermeldungen betreffend den genannten Ausfall der Versorgungsspannung Uv beim Umschalten der Zone Z1..Z6 vom Energiesparmodus in einen Normalbetriebsmodus anzuzeigen, wenn die Integrität der Zone Z1..Z6 beim genannten Umschalten verletzt ist, und zu maskieren, zu unterdrücken oder automatisch zu quittieren, wenn die Integrität der Zone Z1..Z6 beim genannten Umschalten unversehrt ist, und der Zone Z1..Z6 zugeordnete Fehlermeldungen betreffend den genannten Ausfall der Versorgungsspannung Uv beim Umschalten der Zone Z1..Z6 vom Energiesparmodus in einen Normalbetriebsmodus unabhängig von der Integrität der Zone Z1..Z6 beim genannten Umschalten zu maskieren, zu unterdrücken oder automatisch zu quittieren, und/oder
b) der Zone Z1..Z6 zugeordnete Fehlerdiagnosefunktionen oder Fehlerbehebungsfunktionen exklusive Fehlerdiagnosefunktionen betreffend den genannten Ausfall der Versorgungsspannung Uv beim Umschalten der Zone Z1..Z6 vom Energiesparmodus in den Normalbetriebsmodus auszuführen, wenn die Integrität der Zone Z1..Z6 beim genannten Umschalten verletzt ist, und deren Ausführung zu unterdrücken oder diese automatisch zu quittieren, wenn die Integrität der Zone Z1..Z6 beim genannten Umschalten unversehrt ist, und der Zone Z1..Z6 zugeordnete Fehlerdiagnosefunktionen betreffend den genannten Ausfall der Versorgungsspannung Uv beim Umschalten der Zone Z1..Z6 vom Energiesparmodus in den Normalbetriebsmodus unabhängig von der Integrität der Zone Z1..Z6 beim genannten Umschalten zu unterdrücken oder diese automatisch zu quittieren, und/oder
c) der Zone Z1..Z6 zugeordnete Fehlermeldungen exklusive Fehlermeldungen betreffend den genannten Ausfall der Versorgungsspannung Uv beim Umschalten der Zone Z1..Z6 vom Energiesparmodus in einen Normalbetriebsmodus anzuzeigen, wenn die Integrität der Zone Z1..Z6 beim genannten Umschalten verletzt ist, und ein Fehlermeldungs-Quittierelement beim Umschalten vom Energiesparmodus in den Normalbetriebsmodus bereitzustellen, mittels welchem mehrere der Zone Z1..Z6 zugeordnete Fehlermeldungen exklusive Fehlermeldungen betreffend den genannten Ausfall der Versorgungsspannung Uv gleichzeitig quittierbar sind, wenn die Integrität der Zone Z1..Z6 beim genannten Umschalten unversehrt ist, und mittels welchem mehrere der Zone Z1..Z6 zugeordnete Fehlermeldungen betreffend den genannten Ausfall der Versorgungsspannung Uv unabhängig von der Integrität der Zone Z1..Z6 beim genannten Umschalten quittierbar sind.

Bei dieser Ausführungsvariante werden die Fehlermeldungen betreffend den genannten Ausfall der Versorgungsspannung Uv anders behandelt werden als alle anderen Fehlermeldungen. Konkret werden der Zone Z1..Z6 zugeordnete Fehlermeldungen, welche auf einen durch das Umschalten in den Energiesparmodus bewusst herbeigeführten Ausfall der Versorgungsspannung Uv zurückzuführen sind, beim Umschalten vom Energiesparmodus in den Normalbetriebsmodus immer maskiert, unterdrückt und/oder automatisch quittiert oder können auf einfache Weise durch Betätigen des Fehlermeldungs-Quittierelements quittiert werden. Gleichermaßen werden Fehlerdiagnosefunktionen, welche auf einen bewusst herbeigeführten Ausfall der Versorgungsspannung Uv zurückzuführen sind, beim Umschalten vom Energiesparmodus in den Normalbetriebsmodus immer unterdrückt oder automatisch quittiert.

Das Kommissioniersystem 1 kann zusätzlich auch eine durch das Energieversorgungssystem EVS mit Energie versorgte Sicherheitstechnik aufweisen, wobei im Energiesparmodus zumindest ein Teil des Energieversorgungssystems EVS für die Sicherheitstechnik abgeschaltet ist. Eine solche Sicherheitstechnik kann beispielsweise die Kamera 17 aus den Fig. 2 und 3 aufweisen. Diese kann nicht nur dafür vorgesehen sein, Liegewaren 9a..9g auf der Förderbahn 8 zu detektieren, sondern auch eine Alarmmeldung auslösen, wenn der Antrieb M der Förderbahn 8 abgeschaltet ist, und ein Signal daher nicht von einer Liegeware 9a..9g herrühren kann. Befindet sich eine solche Kamera 17 in einer Zone Z1..Z6 im Energiesparmodus, so kann diese ausgeschaltet werden, wenn die Integrität der Zone Z1..Z6 auf andere Weise festgestellt wird. Sicherheitstechnik, welche nicht nur auf die abgeschaltete Zone Z1..Z6 wirkt, kann auch eingeschaltet bleiben. Beispielsweise können dies Teile einer Alarmanlage sein, mit welcher das Kommissioniersystem 1 überwacht wird.

Generell kann vorgesehen sein, dass das Steuersystem 22, insbesondere umfassend das Energiesparmodul 21, dazu ausgebildet ist,
a) alle Fehlermeldungen, insbesondere alle einer Zone Z1..Z6 zugeordneten Fehlermeldungen, beim Umschalten vom Energiesparmodus in einen Normalbetriebsmodus zu maskieren, zu unterdrücken oder automatisch zu quittieren, und/oder
b) alle Fehlerdiagnosefunktionen oder Fehlerbehebungsfunktionen, insbesondere alle einer Zone Z1..Z6 zugeordneten Fehlerdiagnosefunktionen oder Fehlerbehebungsfunktionen, beim Umschalten vom Energiesparmodus in den Normalbetriebsmodus zu unterdrücken oder automatisch zu quittieren, und/oder
c) ein Fehlermeldungs-Quittierelement beim Umschalten vom Energiesparmodus in den Normalbetriebsmodus bereitzustellen, mittels welchem alle Fehlermeldungen, insbesondere alle einer Zone Z1..Z6 zugeordneten Fehlermeldungen, gleichzeitig quittierbar sind. Dadurch kann das Umschalten vom Energiesparmodus in den Normalbetriebsmodus mit besonders geringem Aufwand erfolgen.

Denkbar wäre aber auch, dass das Kommissioniersystem 1
ein Auswahlmodul umfasst, welches dazu ausgebildet ist, eine Auswahl von Fehlermeldungen, Fehlerdiagnosefunktionen oder Fehlerbehebungsfunktionen zu erfassen, insbesondere eine Auswahl von Fehlermeldungen, Fehlerdiagnosefunktionen oder Fehlerbehebungsfunktionen, welche einer Zone Z1..Z6 zugeordnet sind, und
das Steuersystem 22, insbesondere umfassend das Energiesparmodul 21, dazu ausgebildet ist,
   a) die ausgewählten Fehlermeldungen beim Umschalten vom Energiesparmodus in einen Normalbetrieb von einem Maskieren, Unterdrücken oder automatischen Quittieren auszunehmen, und/oder
   b) die ausgewählten Fehlerdiagnosefunktionen oder Fehlerbehebungsfunktionen beim Umschalten vom Energiesparmodus in den Normalbetrieb von einem Unterdrücken oder automatischen Quittieren auszunehmen, und/oder
   c) ein Fehlermeldungs-Quittierelement beim Umschalten vom Energiesparmodus in den Normalbetriebsmodus bereitzustellen, wobei die ausgewählten Fehlermeldungen von einer gleichzeitigen Quittierung durch das Fehlermeldungs-Quittierelement ausgenommen sind. Beispielsweise kann das Auswahlmodul Teil des Steuersystem 22, insbesondere umfassend das Energiesparmoduls 21, sein und insbesondere in Software ausgeführt sein. In einer Eingabemaske des Auswahlmoduls können in den Fällen a) und c) jene Fehlermeldungen aktiv ausgewählt werden, welche beim Umschalten vom Energiesparmodus in einen Normalbetrieb nicht maskiert, unterdrückt oder automatisch quittiert werden sollen respektive nicht durch das Fehlermeldungs-Quittierelement quittierbar sein sollen, und im Fall b) jene Fehlerdiagnosefunktionen oder Fehlerbehebungsfunktionen, welche beim Umschalten vom Energiesparmodus nicht unterdrückt oder automatisch quittiert werden sollen. Die Punkte a), b) und c) können sich auch auf eine Negativauswahl (d.h. Abwahl) beziehen, beispielsweise wenn in einer Eingabemaske des Auswahlmoduls in den Fällen a) und c) jene Fehlermeldungen aktiv ausgewählt werden, welche beim Umschalten vom Energiesparmodus in einen Normalbetrieb maskiert, unterdrückt oder automatisch quittiert werden sollen respektive durch das Fehlermeldungs-Quittierelement quittierbar sein sollen, und im Fall b) jene Fehlerdiagnosefunktionen oder Fehlerbehebungsfunktionen aktiv ausgewählt werden, welche beim Umschalten vom Energiesparmodus unterdrückt oder automatisch quittiert werden sollen.

Abschließend wird festgehalten, dass der Schutzbereich durch die Patentansprüche bestimmt ist.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Kommissioniersystem
- 2: Wand
- 3a, 3b: Warenlager
- 4a, 4b: Wareneingang
- 5: Warenausgang

- 6: Regal
- 7a, 7b: Regalbediengerät
- 8a..8e: Förderbahn
- 9a..9h: Liegeware
- 10: Hängeförderbahn

- 11: Hängeware
- 12a..12c: autonomes Flurförderfahrzeug
- 13a..13c: Roboter
- 14: Kommissionierstation
- 15a..15c: Türschalter (Integritäts-Überwachungseinrichtung)

- 16a, 16b: Lichtschranke / Lichtgitter (Integritäts-Überwachungseinrichtung)
- 17a, 17b: Überwachungskamera (Integritäts-Überwachungseinrichtung)
- 18a, 18b: Bewegungsmelder (Integritäts-Überwachungseinrichtung)
- 19a..19e: Not-Halt- und/oder Not-Aus-Betätigungselement
- 20: Steuerung

- 21: Energiesparmodul
- 22: Steuersystem
- 23: Submodul des Steuersystems
- 24: Beleuchtung
- 25: Förderrolle
- 26: Schalter
- 27: Spannungsüberwachungseinrichtung
- 28: Schwellwertschalter
- 29: RS-Flip-Flop
- 30: ODER-Gatter
- 31: Signallampe

- D1..D7: Durchgang
- EVS: Energieversorgungssystem
- EXT: externes Quittiersignal
- M: Antrieb / Antriebssystem
- Q: Ausgang
- R: Reset-Eingang
- S: Set-Eingang
- T: Taste
- URef: Referenzspannung
- Uv: Versorgungsspannung
- Z1..Z6: Zone

## Patentansprüche

1. Kommissioniersystem (1) mit einem Warenlager (3a, 3b), einer Kommissionierstation (14), einer Fördertechnik (8a..8e, 10, 12a..12c) zum Transportieren von Waren (9a..9h, 11) zwischen dem Warenlager (3a, 3b) und der Kommissionierstation (14), einem Antriebssystem (M) für die Fördertechnik (8a..8e, 10, 12a..12c), einem Steuersystem (22) für die Fördertechnik (8a..8e, 10, 12a..12c), einem Energieversorgungssystem (EVS), welches dazu eingerichtet ist, das Antriebssystem (M) und das Steuersystem (22) mit Energie zu versorgen, sowie mit einer Versorgungsspannung (Uv) für zumindest einen Teil des Kommissioniersystems (1), wobei das Steuersystem (22) eingerichtet ist, das Kommissioniersystem (1) aus einem Normalbetriebsmodus in einen Energiesparmodus und aus dem Energiesparmodus in den Normalbetriebsmodus zu schalten, wobei im Energiesparmodus zumindest eine Versorgungsspannung (Uv) für zumindest einen Teil des Kommissioniersystems (1) bewusst abgeschaltet ist, wobei das bewusste Abschalten der Versorgungsspannung (Uv) durch Abschalten zumindest eines Teils des Energieversorgungssystems (EVS) erfolgt,
**dadurch gekennzeichnet, dass**
das Steuersystem (22) eingerichtet ist,
a) Fehlermeldungen beim Umschalten vom Energiesparmodus in den Normalbetriebsmodus, welche auf einen bewusst herbeigeführten Ausfall der Versorgungsspannung (Uv) zurückzuführen sind, zu maskieren, zu unterdrücken oder automatisch zu quittieren, und/oder
b) Fehlerdiagnosefunktionen oder Fehlerbehebungsfunktionen beim Umschalten vom Energiesparmodus in den Normalbetriebsmodus, welche auf einen bewusst herbeigeführten Ausfall der Versorgungsspannung (Uv) zurückzuführen sind, zu unterdrücken oder automatisch zu quittieren.

2. Kommissioniersystem (1) nach Anspruch 1, **dadurch gekennzeichnet, dass**
das Steuersystem (22) ein Submodul (23) mit einer Spannungsüberwachungseinrichtung (27) umfasst, welche dazu ausgebildet ist, einen Ausfall einer Versorgungsspannung (Uv) für das Submodul (23) zu detektieren und auch nach einem Wiedereinschalten der Versorgungsspannung (Uv) mittels einer Fehlermeldung anzuzeigen, und
das Steuersystem (22) eingerichtet ist,
a) Fehlermeldungen betreffend den genannten Ausfall der Versorgungsspannung (Uv) beim Umschalten vom Energiesparmodus in den Normalbetriebsmodus zu maskieren, zu unterdrücken und/oder automatisch zu quittieren, und/oder
b) Fehlerdiagnosefunktionen betreffend den genannten Ausfall der Versorgungsspannung (Uv) beim Umschalten vom Energiesparmodus in den Normalbetriebsmodus zu unterdrücken oder diese automatisch zu quittieren, und/oder
c) ein Fehlermeldungs-Quittierelement beim Umschalten vom Energiesparmodus in den Normalbetriebsmodus bereitzustellen, mittels welchem mehrere Fehlermeldungen betreffend den genannten Ausfall der Versorgungsspannung (Uv) gleichzeitig quittierbar sind.

3. Kommissioniersystem (1) nach Anspruch 1, **dadurch gekennzeichnet, dass**
das Kommissioniersystem (1) in räumlich begrenzte Zonen (Z1..Z6) eingeteilt ist, welche im Normalbetriebsmodus jeweils über die jeweilige, durch das Energieversorgungssystem (EVS) bereitgestellte Versorgungsspannung (Uv) versorgt werden, und
das Steuersystem (22) eingerichtet ist, eine, mehrere oder alle Zonen (Z1..Z6) der Zonen (Z1..Z6) bedarfsweise aus dem Normalbetriebsmodus in den Energiesparmodus und aus dem Energiesparmodus in den Normalbetriebsmodus zu schalten, wobei in einer Zone im Energiesparmodus zumindest die dieser Zone zugeordnete durch Abschalten des die jeweilige Zone versorgenden Teils des Energieversorgungssystems (EVS) bereitgestellte Versorgungsspannung (Uv) bewusst abgeschaltet ist, und
das Steuersystem (22) eingerichtet ist,
a) der Zone (Z1..Z6) zugeordnete Fehlermeldungen beim Umschalten der Zone (Z1..Z6) vom Energiesparmodus in den Normalbetriebsmodus zu maskieren, zu unterdrücken oder automatisch zu quittieren, und/oder
b) der Zone (Z1..Z6) zugeordnete Fehlerdiagnosefunktionen oder Fehlerbehebungsfunktionen beim Umschalten der Zone (Z1..Z6) vom Energiesparmodus in den Normalbetriebsmodus zu unterdrücken oder automatisch zu quittieren, und/oder
c) ein Fehlermeldungs-Quittierelement beim Umschalten vom Energiesparmodus in den Normalbetriebsmodus bereitzustellen, mittels welchem mehrere der Zone (Z1..Z6) zugeordnete Fehlermeldungen gleichzeitig quittierbar sind.

4. Kommissioniersystem (1) nach Anspruch 3, **dadurch gekennzeichnet, dass**
das Steuersystem (22) mehrere Energie-Schaltmodule umfasst, welche jeweils einer Zone (Z1..Z6) der Zonen (Z1..Z6) zugeordnet und dazu ausgebildet sind, die jeweilige Zone (Z1..Z6) bedarfsweise aus dem Normalbetriebsmodus in den Energiesparmodus und aus dem Energiesparmodus in den Normalbetriebsmodus zu schalten.

5. Kommissioniersystem (1) nach Anspruch 3 oder 4, **dadurch gekennzeichnet, dass**
das Kommissioniersystem (1) eine Integritäts-Überwachungseinrichtung (15a..15c, 16a, 16b, 17a, 17b, 18a, 18b) umfasst, die dazu ausgebildet ist, eine Integrität der Zone (Z1..Z6) im Energiesparmodus zu überwachen, wobei die Integrität der Zone (Z1..Z6) zumindest dann verletzt wird, wenn die Integritäts-Überwachungseinrichtung (15a..15c, 16a, 16b, 17a, 17b, 18a, 18b) einen Zutritt einer Person zu der Zone (Z1..Z6) detektiert, und
das Steuersystem (22) eingerichtet ist,
a) der Zone (Z1..Z6) zugeordnete Fehlermeldungen beim Umschalten der Zone (Z1..Z6) vom Energiesparmodus in den Normalbetriebsmodus an einer Ausgabevorrichtung anzuzeigen, wenn die Integrität der Zone (Z1..Z6) beim genannten Umschalten verletzt ist, und zu maskieren, zu unterdrücken oder automatisch zu quittieren, wenn die Integrität der Zone (Z1..Z6) beim genannten Umschalten unversehrt ist, und/oder
b) der Zone (Z1..Z6) zugeordnete Fehlerdiagnosefunktionen oder Fehlerbehebungsfunktionen beim Umschalten der Zone (Z1..Z6) vom Energiesparmodus in den Normalbetriebsmodus auszuführen, wenn die Integrität der Zone (Z1..Z6) beim genannten Umschalten verletzt ist, und deren Ausführung zu unterdrücken oder diese automatisch zu quittieren, wenn die Integrität der Zone (Z1..Z6) beim genannten Umschalten unversehrt ist, und/oder
c) der Zone (Z1..Z6) zugeordnete Fehlermeldungen beim Umschalten der Zone (Z1..Z6) vom Energiesparmodus in den Normalbetriebsmodus an einer Ausgabevorrichtung anzuzeigen, wenn die Integrität der Zone (Z1..Z6) beim genannten Umschalten verletzt ist, und ein Fehlermeldungs-Quittierelement beim Umschalten vom Energiesparmodus in den Normalbetriebsmodus bereitzustellen, mittels welchem mehrere der Zone (Z1..Z6) zugeordnete Fehlermeldungen gleichzeitig quittierbar sind, wenn die Integrität der Zone (Z1..Z6) beim genannten Umschalten unversehrt ist.

6. Kommissioniersystem (1) nach einem der Ansprüche 1 bis 5, **dadurch gekennzeichnet, dass** das Kommissioniersystem (1)
ein Auswahlmodul umfasst, welches dazu ausgebildet ist, eine Auswahl von Fehlermeldungen, Fehlerdiagnosefunktionen oder Fehlerbehebungsfunktionen zu erfassen, insbesondere eine Auswahl von Fehlermeldungen, Fehlerdiagnosefunktionen oder Fehlerbehebungsfunktionen, welche einer Zone (Z1..Z6) zugeordnet sind, und
das Steuersystem (22) eingerichtet ist,
a) die ausgewählten Fehlermeldungen beim Umschalten vom Energiesparmodus in einen Normalbetrieb von einem Maskieren, Unterdrücken oder automatischen Quittieren auszunehmen, und/oder
b) die ausgewählten Fehlerdiagnosefunktionen oder Fehlerbehebungsfunktionen beim Umschalten vom Energiesparmodus in den Normalbetrieb von einem Unterdrücken oder automatischen Quittieren auszunehmen, und/oder
c) ein Fehlermeldungs-Quittierelement beim Umschalten vom Energiesparmodus in den Normalbetriebsmodus bereitzustellen, wobei die ausgewählten Fehlermeldungen von einer gleichzeitigen Quittierung durch das Fehlermeldungs-Quittierelement ausgenommen sind.

7. Kommissioniersystem (1) nach einem der Ansprüche 1 bis 6, **dadurch gekennzeichnet, dass** das Steuersystem (22) eingerichtet ist, ein Fehlermeldungs-Quittierelement bereitzustellen, mittels welchem mehrere Fehlermeldungen gleichzeitig durch eine einzige Betätigung des Fehlermeldungs-Quittierelements quittierbar sind.

8. Kommissioniersystem (1) nach einem der Ansprüche 1 bis 7, **dadurch gekennzeichnet, dass** die Fördertechnik (8a..8e, 10, 12a..12c) mobile Fördertechnik umfasst, insbesondere autonome Flurförderfahrzeuge (12a..12c), und dass das Steuersystem (22) eingerichtet ist, Fehlermeldungen und/oder Fehlerdiagnosefunktionen, welche beim Wiederherstellen einer für die mobilen Förderfahrzeuge (12a..12c) bewusst abgeschalteten Versorgungsspannung (Uv) auftreten, gemäß Anspruch 1 zu maskieren, zu unterdrücken oder automatisch zu quittieren.

9. Kommissioniersystem (1) nach einem der Ansprüche 1 bis 8, **dadurch gekennzeichnet, dass** autonome Flurförderfahrzeuge (12a..12c) über drahtgebundene oder drahtlose Kommunikationskanäle mit dem Steuersystem (22) kommunizieren und dass ein Ausfall der Versorgungsspannung (Uv) für die Fahrzeuge über fehlende Erreichbarkeit detektierbar ist (vgl. Beschreibung: "... kann auch indirekt ... detektiert werden, dass ein Submodul ... über einen Kommunikationskanal nicht mehr erreichbar ist.").

10. Verfahren zum Umschalten von einem Energiesparmodus in einen Normalbetriebsmodus in einem Kommissioniersystem (1) mit einem Warenlager (3a, 3b), einer Kommissionierstation (14), einer Fördertechnik (8a..8e, 10, 12a..12c) zum Transportieren von Waren (9a..9h, 11) zwischen dem Warenlager (3a, 3b) und der Kommissionierstation (14), einem Antriebssystem (M) für die Fördertechnik (8a..8e, 10, 12a..12c), einem Steuersystem (22) für die Fördertechnik (8a..8e, 10, 12a..12c) und einem Energieversorgungssystem (EVS), welches dazu eingerichtet ist, das Antriebssystem (M) und das Steuersystem (22) mit Energie zu versorgen, wobei im Energiesparmodus zumindest eine Versorgungsspannung (Uv) für zumindest einen Teil des Kommissioniersystems abgeschaltet ist,
**dadurch gekennzeichnet, dass**
das Steuersystem (22) das Kommissioniersystem (1) aus dem Energiesparmodus in den Normalbetriebsmodus umschaltet, und
a) Fehlermeldungen beim Umschalten vom Energiesparmodus in den Normalbetriebsmodus vom Steuersystem (22) maskiert, unterdrückt oder automatisch quittiert werden, sofern diese auf einen bewusst herbeigeführten Ausfall der Versorgungsspannung (Uv) zurückzuführen sind, und/oder
b) Fehlerdiagnosefunktionen oder Fehlerbehebungsfunktionen beim Umschalten vom Energiesparmodus in den Normalbetriebsmodus vom Steuersystem (22) unterdrückt oder automatisch quittiert werden, sofern diese auf einen bewusst herbeigeführten Ausfall der Versorgungsspannung (Uv) zurückzuführen sind, und/oder
c) ein Fehlermeldungs-Quittierelement beim Umschalten vom Energiesparmodus in den Normalbetriebsmodus vom Steuersystem (22) bereitgestellt wird, mittels welchem mehrere Fehlermeldungen gleichzeitig quittierbar sind.

11. Verfahren nach Anspruch 10, **dadurch gekennzeichnet, dass**
das Steuersystem (22) ein Submodul (23) mit einer Spannungsüberwachungseinrichtung (27) umfasst, welche einen Ausfall einer Versorgungsspannung (Uv) für das Submodul (23) detektiert und auch nach einem Wiedereinschalten der Versorgungsspannung (Uv) mittels einer Fehlermeldung anzeigt, und
das Steuersystem (22)
a) Fehlermeldungen betreffend den genannten Ausfall der Versorgungsspannung (Uv) beim Umschalten vom Energiesparmodus in den Normalbetriebsmodus maskiert, unterdrückt und/oder automatisch quittiert, und/oder
b) Fehlerdiagnosefunktionen betreffend den genannten Ausfall der Versorgungsspannung (Uv) beim Umschalten vom Energiesparmodus in den Normalbetriebsmodus unterdrückt oder diese automatisch quittiert, und/oder
c) ein Fehlermeldungs-Quittierelement beim Umschalten vom Energiesparmodus in den Normalbetriebsmodus bereitstellt, mittels welchem mehrere Fehlermeldungen betreffend den genannten Ausfall der Versorgungsspannung (Uv) gleichzeitig quittierbar sind.

12. Verfahren nach Anspruch 10, **dadurch gekennzeichnet, dass**
das Kommissioniersystem (1) in räumlich begrenzte Zonen (Z1..Z6) eingeteilt ist, welche im Normalbetriebsmodus jeweils durch eine zugeordnete Versorgungsspannung (Uv) versorgt sind, und
das Steuersystem (22) eine, mehrere oder alle Zonen (Z1..Z6) der Zonen (Z1..Z6) bedarfsweise aus dem Normalbetriebsmodus in den Energiesparmodus und aus dem Energiesparmodus in den Normalbetriebsmodus schaltet, wobei im Energiesparmodus zumindest jener Teil des Energieversorgungssystems (EVS) abgeschaltet ist, welcher die jeweilige Zone (Z1..Z6) oder jeweiligen Zonen (Z1..Z6) mit Energie versorgt, und
das Steuersystem (22)
a) der Zone (Z1..Z6) zugeordnete Fehlermeldungen beim Umschalten der Zone (Z1..Z6) vom Energiesparmodus in den Normalbetriebsmodus maskiert, unterdrückt und/oder automatisch quittiert, soweit diese auf einen bewusst herbeigeführten Ausfall der Versorgungsspannung (Uv) zurückzuführen sind, und/oder
b) der Zone (Z1..Z6) zugeordnete Fehlerdiagnosefunktionen oder Fehlerbehebungsfunktionen beim Umschalten der Zone (Z1..Z6) vom Energiesparmodus in den Normalbetriebsmodus unterdrückt oder diese automatisch quittiert, soweit diese auf einen bewusst herbeigeführten Ausfall der Versorgungsspannung (Uv) zurückzuführen sind, und/oder
c) ein Fehlermeldungs-Quittierelement beim Umschalten vom Energiesparmodus in den Normalbetriebsmodus bereitstellt, mittels welchem mehrere der Zone (Z1..Z6) zugeordnete Fehlermeldungen gleichzeitig quittierbar sind.

13. Verfahren nach Anspruch 12, **dadurch gekennzeichnet, dass**
das Steuersystem (22) mehrere Energie-Schaltmodule umfasst, welche jeweils einer Zone (Z1..Z6) der Zonen (Z1..Z6) zugeordnet sind, wobei eine oder mehrere Zonen (Z1..Z6) bedarfsweise durch das jeweils zugeordnete Energie-Schaltmodul aus dem Normalbetriebsmodus in den Energiesparmodus und aus dem Energiesparmodus in den Normalbetriebsmodus geschaltet werden.

14. Verfahren nach Anspruch 12 oder 13, **dadurch gekennzeichnet, dass**
das Kommissioniersystem (1) eine Integritäts-Überwachungseinrichtung (15a..15c, 16a, 16b, 17a, 17b, 18a, 18b) umfasst, die eine Integrität der Zone (Z1..Z6) im Energiesparmodus überwacht, wobei die Integrität der Zone (Z1..Z6) zumindest dann verletzt wird, wenn die Integritäts-Überwachungseinrichtung (15a..15c, 16a, 16b, 17a, 17b, 18a, 18b) einen Zutritt einer Person zu der Zone (Z1..Z6) detektiert, und
das Steuersystem (22)
a) der Zone (Z1..Z6) zugeordnete Fehlermeldungen beim Umschalten der Zone (Z1..Z6) vom Energiesparmodus in den Normalbetriebsmodus an einer Ausgabevorrichtung anzeigt, wenn die Integrität der Zone (Z1..Z6) beim genannten Umschalten verletzt ist, und maskiert, unterdrückt und/oder automatisch quittiert, wenn die Integrität der Zone (Z1..Z6) beim genannten Umschalten unversehrt ist, und/oder
b) der Zone (Z1..Z6) zugeordnete Fehlerdiagnosefunktionen oder Fehlerbehebungsfunktionen beim Umschalten der Zone (Z1..Z6) vom Energiesparmodus in den Normalbetriebsmodus ausführt, wenn die Integrität der Zone (Z1..Z6) beim genannten Umschalten verletzt ist, und deren Ausführung unterdrückt oder diese automatisch quittiert, wenn die Integrität der Zone (Z1..Z6) beim genannten Umschalten unversehrt ist, und/oder
c) der Zone (Z1..Z6) zugeordnete Fehlermeldungen beim Umschalten der Zone (Z1..Z6) vom Energiesparmodus in den Normalbetriebsmodus an einer Ausgabevorrichtung anzeigt, wenn die Integrität der Zone (Z1..Z6) beim genannten Umschalten verletzt ist, und ein Fehlermeldungs-Quittierelement beim Umschalten vom Energiesparmodus in den Normalbetriebsmodus bereitstellt, mittels welchem mehrere der Zone (Z1..Z6) zugeordnete Fehlermeldungen gleichzeitig quittierbar sind, wenn die Integrität der Zone (Z1..Z6) beim genannten Umschalten unversehrt ist.

15. Verfahren nach Anspruch 12 oder 13, **dadurch gekennzeichnet, dass**
das Kommissioniersystem (1) eine Integritäts-Überwachungseinrichtung (15a..15c, 16a, 16b, 17a, 17b, 18a, 18b) umfasst, die eine Integrität der Zone (Z1..Z6) im Energiesparmodus überwacht, wobei die Integrität der Zone (Z1..Z6) zumindest dann verletzt wird, wenn die Integritäts-Überwachungseinrichtung (15a..15c, 16a, 16b, 17a, 17b, 18a, 18b) einen Zutritt einer Person zu der Zone (Z1..Z6) detektiert, und
das Steuersystem (22) ein Submodul (23) mit einer Spannungsüberwachungseinrichtung (27) umfasst, welche einen Ausfall einer Versorgungsspannung (Uv) für das Submodul (23) detektiert und auch nach einem Wiedereinschalten der Versorgungsspannung (Uv) mittels einer Fehlermeldung anzeigt, und
das Steuersystem (22)
a) der Zone (Z1..Z6) zugeordnete Fehlermeldungen inklusive Fehlermeldungen betreffend den genannten Ausfall der Versorgungsspannung (Uv) beim Umschalten der Zone (Z1..Z6) vom Energiesparmodus in einen Normalbetriebsmodus anzeigt, wenn die Integrität der Zone (Z1..Z6) beim genannten Umschalten verletzt ist, und maskiert, unterdrückt und/oder automatisch quittiert, wenn die Integrität der Zone (Z1..Z6) beim genannten Umschalten unversehrt ist, und/oder
b) der Zone (Z1..Z6) zugeordnete Fehlerdiagnosefunktionen oder Fehlerbehebungsfunktionen inklusive Fehlerdiagnosefunktionen betreffend den genannten Ausfall der Versorgungsspannung (Uv) beim Umschalten der Zone (Z1..Z6) vom Energiesparmodus in den Normalbetriebsmodus ausführt, wenn die Integrität der Zone (Z1..Z6) beim genannten Umschalten verletzt ist, und deren Ausführung unterdrückt oder diese automatisch quittiert, wenn die Integrität der Zone (Z1..Z6) beim genannten Umschalten unversehrt ist, und/oder
c) der Zone (Z1..Z6) zugeordnete Fehlermeldungen inklusive Fehlermeldungen betreffend den genannten Ausfall der Versorgungsspannung (Uv) beim Umschalten der Zone (Z1..Z6) vom Energiesparmodus in einen Normalbetriebsmodus anzeigt, wenn die Integrität der Zone (Z1..Z6) beim genannten Umschalten verletzt ist, und ein Fehlermeldungs-Quittierelement beim Umschalten vom Energiesparmodus in den Normalbetriebsmodus bereitstellt, mittels welchem mehrere der Zone (Z1..Z6) zugeordnete Fehlermeldungen inklusive Fehlermeldungen betreffend den genannten Ausfall der Versorgungsspannung (Uv) gleichzeitig quittierbar sind, wenn die Integrität der Zone (Z1..Z6) beim genannten Umschalten unversehrt ist.

16. Verfahren nach einem der Ansprüche 14 oder 15, **dadurch gekennzeichnet, dass**
die Integritäts-Überwachungseinrichtung (15a..15c, 16a, 16b, 17a, 17b, 18a, 18b) ein auf die Energieversorgung der Zone (Z1..Z6) wirkendes Not-Halt- und/oder Not-Aus-Betätigungselement (19a..19e) umfasst, und
a) die Integrität der Zone (Z1..Z6) verletzt ist und verletzt bleibt, wenn das Not-Halt- und/oder Not-Aus-Betätigungselement (19a..19e) gedrückt wird, selbst wenn das Not-Halt- und/oder Not-Aus-Betätigungselement (19a..19e) wieder entriegelt wird, und/oder b) die Integrität der Zone (Z1..Z6) nur so lange verletzt ist, solange das Not-Halt- und/oder Not-Aus-Betätigungselement (19a..19e) gedrückt oder eingerastet ist, und wiederhergestellt wird, wenn das Betätigungselement losgelassen oder entriegelt wird.
